# EUROPÄISCHE PATENTSCHRIFT

(11) **EP 4 168 881 B1**
(45) Veröffentlichungstag und Bekanntmachung des Hinweises auf die Patenterteilung: **16.09.2026**
(21) Anmeldenummer: 21733443.2
(22) Anmeldetag: 17.06.2021
(51) Int. Cl.: G06F 3/01, H04N 7/15, H04M 3/56

(54) **VIDEOKONFERENZVERFAHREN UND VIDEOKONFERENZSYSTEM**
VIDEO CONFERENCING METHOD AND VIDEO CONFERENCING SYSTEM
PROCÉDÉ DE VIDÉO CONFÉRENCE ET SYSTÈME DE VIDÉO CONFÉRENCE

(30) Priorität: 19.06.2020 EP 20181006
(43) Veröffentlichungstag der Anmeldung: 26.04.2023
(73) Patentinhaber: Brainbox GmbH, 75172 Pforzheim (DE)
(72) Erfinder: KRAUS, Carsten, 75173 Pforzheim (DE)
(74) Vertreter: Meissner Bolte Partnerschaft mbB
(86) Internationale Anmeldenummer: PCT/EP2021/066522
(87) Internationale Veröffentlichungsnummer: WO 2021/255211

(56) Entgegenhaltungen:
- WO-A1-2011/148366
- WO-A1-2014/178047
- US-A1- 2014 098 179
- US-B1- 6 806 898

## Beschreibung

Die vorliegende Erfindung betrifft ein Videokonferenzverfahren mit einer ersten und einer zweiten Videokonferenzeinrichtung. Bei jeder Videokonferenzeinrichtung werden Videobilder eines Nutzers aufgenommen, an die andere, entfernt angeordnete Videokonferenzeinrichtung übertragen und dort von einer Anzeigevorrichtung angezeigt. Ferner betrifft die Erfindung ein Videokonferenzsystem, das eine erste Videokonferenzeinrichtung mit einer ersten Anzeigevorrichtung und einer ersten Bildaufnahmevorrichtung sowie eine zweite Videokonferenzeinrichtung mit einer zweiten Anzeigevorrichtung und einer zweiten Bildaufnahmevorrichtung aufweist.

Bei einer Videokonferenz ergibt sich das Problem, dass sich kein direkter Blickkontakt zwischen den Nutzern ergibt. Hierin unterscheidet sich die Situation der Videokonferenz von einer Situation, bei der sich die beiden Nutzer direkt gegenübersitzen. Wenn nämlich der erste Nutzer die Darstellung des zweiten Nutzers auf seiner Anzeigevorrichtung betrachtet, blickt der erste Nutzer nicht in die Bildaufnahmevorrichtung, so dass bei der Darstellung des ersten Nutzers bei der Anzeigevorrichtung des zweiten Nutzers dieser erste Nutzer so dargestellt wird, dass er nicht in die Augen des zweiten Nutzers blickt. Wenn der erste Nutzer umgekehrt in die Bildaufnahmevorrichtung blickt, so dass sich bei der Darstellung des ersten Nutzers auf der Anzeigevorrichtung des zweiten Nutzers ein Blickkontakt zwischen den Nutzern ergibt, kann der erste Nutzer auf seiner Anzeigevorrichtung die Darstellung des zweiten Nutzers nur peripher erfassen.

Um einen Blickkontakt der Nutzer bei einer Videokonferenz zu ermöglichen, schlägt die EP 0 970 584 B1 vor, Kameras in Öffnungen des Bildschirms anzuordnen. Ferner wird vorgeschlagen, mit zwei Kameras jeweils Teilaufnahmen eines Raums aufzunehmen. Diese Teilaufnahmen werden in einer Videoverarbeitungseinheit aneinandergefügt, um auf einem Bildschirm aus den von beiden Kameras stammenden Signalen ein einziges Bild herzustellen.

In ähnlicher Weise beschreibt die US 7,515,174 B1 ein Videokonferenzsystem, bei dem der Blickkontakt der Nutzer dadurch hergestellt wird, dass mehrere Kameras verwendet werden, deren Bildströme einander überlagert werden.

Des Weiteren beschreibt die US 8,908,008 B2 ein Verfahren, bei dem Bilder des ersten Nutzers mittels einer Kamera durch ein Display hindurch aufgenommen werden, wobei das Display zwischen dem ersten Nutzer und der Kamera angeordnet ist. Von dem Display wird ein Bildstrom des zweiten Nutzers empfangen. Dabei werden die Bilder des zweiten Nutzers so verschoben, dass die Darstellung des Gesichts des zweiten Nutzers mit den Augen des ersten Nutzers und dem Objektiv der Kamera ausgerichtet ist.

Weitere Konzepte sind in WO2011/148366 A1, US 2014/098179 A1 und US 6 806 898 B1 offenbart.

Nachteilig an bekannten Videokonferenzverfahren und Videokonferenzsystemen ist, dass der gegenseitige Blickkontakt der Nutzer nur mit einem großen Hardwareaufwand bereitgestellt werden kann. Entweder sind mehrere Kameras zur Aufnahme eines Nutzers vorgesehen oder es werden besondere Anforderungen an die Anzeigevorrichtung gestellt, so dass z. B. durch die Anzeigevorrichtung hindurch Videobilder des Nutzers aufgenommen werden können.

Erfindungsgemäß wird diese Aufgabe durch ein Videokonferenzverfahren mit den Merkmalen des Anspruchs 1 und ein Videokonferenzsystem mit den Merkmalen des Anspruchs 14 gelöst.

Vorteilhafte Ausgestaltungen und Weiterbildungen ergeben sich aus den abhängigen Ansprüchen.

Dementsprechend werden bei dem erfindungsgemäßen Videokonferenzverfahren mit einer ersten Videokonferenzeinrichtung erste Videobilddaten mittels einer ersten Anzeigevorrichtung wiedergegeben und von einer ersten Bildaufnahmevorrichtung zumindest ein die Augen umfassender Bereich des Kopfes eines ersten Nutzers in einer Position aufgenommen, bei welcher der erste Nutzer die von der ersten Anzeigevorrichtung wiedergegebenen Videobilddaten betrachtet. Dabei umfassen die von der ersten Anzeigevorrichtung wiedergegebenen Videobilddaten zumindest eine Darstellung der Augen eines zweiten Nutzers, die von einer zweiten Bildaufnahmevorrichtung einer zweiten Videokonferenzeinrichtung aufgenommen werden, die entfernt von der ersten Videokonferenzeinrichtung angeordnet ist. Von einer Verarbeitungseinheit werden die von der ersten Bildaufnahmevorrichtung aufgenommenen Videobilddaten zumindest des die Augen umfassenden Bereichs des Kopfes des ersten Nutzers empfangen und verändert. Die veränderten Videobilddaten werden an eine zweite Anzeigevorrichtung einer zweiten Videokonferenzeinrichtung übertragen und von dieser wiedergegeben. Bei dem erfindungsgemäßen Videokonferenzverfahren wird bei der Verarbeitung der Videobilddaten die Blickrichtung des ersten Nutzers erfasst. In den Videobilddaten wird dann zumindest die Wiedergabe des die Augen umfassenden Bereichs des Kopfes so verändert, dass eine Ziel-Blickrichtung des in den veränderten Videobilddaten dargestellten ersten Nutzers so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Der erste bzw. zweite Umgebungsbereich beinhaltet insbesondere die dargestellten Augen des ersten bzw. zweiten Nutzers. Der erste bzw. zweite Umgebungsbereich kann beispielsweise die Strecke von dem ersten dargestellten Auge zu dem zweiten dargestellten Auge des ersten bzw. zweiten Nutzers sein. Der Umgebungsbereich kann dabei auch Bereiche rechts und links sowie oberhalb und unterhalb dieser Strecke beinhalten.

Das erfindungsgemäße Videokonferenzverfahren kann vorteilhafterweise mit einer Hardware eines herkömmlichen Videokonferenzsystems ausgeführt werden. Es kann somit insbesondere rein softwareseitig ausgeführt werden, indem Daten von der entsprechenden Bildaufnahmevorrichtung empfangen werden und Daten an die entsprechende Anzeigevorrichtung übertragen werden. Erfindungsgemäß wird dazu die erste Bildaufnahmevorrichtung rein softwareseitig virtuell in eine andere Perspektive verschoben. Dies geschieht, indem aus dem von der realen Bildaufnahmevorrichtung erfassten Videobild, insbesondere mittels Verfahren der künstlichen Intelligenz, ein fiktives, aber der Realität nahekommendes Videobild erzeugt wird, das dem Bild nahekommt, welches die Bildaufnahmevorrichtung sehen würde, wenn sie nahe der Darstellung der Augen des zweiten Nutzers eingebaut wäre.

Durch die Veränderung der Videobilddaten, welche zumindest die Augen des Nutzers wiedergeben, wird jedoch ein verändertes Videobild erzeugt, bei dem der erste Nutzer eine Ziel-Blickrichtung hat, welche auf die erste Bildaufnahmevorrichtung gerichtet ist, obwohl er tatsächlich nicht in die erste Bildaufnahmevorrichtung blickt, sondern z. B. auf eine Anzeige auf der ersten Anzeigevorrichtung. Für den zweiten Nutzer erscheint die Wiedergabe der veränderten Videobilddaten des ersten Nutzers auf der zweiten Anzeigevorrichtung dann so, dass die Blickrichtung des ersten Nutzers so erscheint, als würde er dem zweiten Nutzer gegenübersitzen. Blickt der erste Nutzer in die auf der ersten Anzeigevorrichtung dargestellten Augen des zweiten Nutzers, so ergibt sich ein direkter Blickkontakt bei der Wiedergabe der veränderten Videobilddaten des ersten Nutzers auf der zweiten Anzeigevorrichtung. Betrachtet der erste Nutzer einen anderen Bereich der Darstellung auf der ersten Anzeigevorrichtung, so ist bei der Darstellung der veränderten Videobilddaten die Blickrichtung des ersten Nutzers, wie sie von der zweiten Anzeigevorrichtung dargestellt wird, in gleicher Weise von dem zweiten Nutzer abgewandt, wie es erscheinen würde, wenn der erste Nutzer dem zweiten Nutzer gegenübersitzen würde. Auf diese Weise kann mit geringem Hardwareaufwand, der nur in der Verarbeitungseinheit liegt, ein Videokonferenzverfahren bereitgestellt werden, welches für den zweiten Nutzer den Eindruck erweckt, als würde der erste Nutzer ihm real gegenübersitzen.

Dabei wird insbesondere ein direkter Blickkontakt hergestellt, wenn der erste Nutzer in die Darstellung der Augen des zweiten Nutzers auf der ersten Anzeigevorrichtung blickt.

In den Videobilddaten wird insbesondere die Wiedergabe des die Augen umfassenden Bereichs des Kopfes des ersten Nutzers so verändert, dass die Ziel-Blickrichtung des ersten Nutzers in den veränderten Videobilddaten so erscheint, als wäre die erste Bildaufnahmevorrichtung auf einer Geraden angeordnet, die durch eines der Augen des ersten Nutzers und durch eines der auf der ersten Anzeigevorrichtung dargestellten Augen des zweiten Nutzers geht. Die Videobilddaten werden insbesondere so verändert, dass die Ziel-Blickrichtung des ersten Nutzers in den veränderten Videobilddaten so erscheint, als wäre die erste Bildaufnahmevorrichtung auf dieser Geraden hinter oder bei einem der auf der ersten Anzeigevorrichtung dargestellten Augen des zweiten Nutzers angeordnet. Auf diese Weise kann die Ziel-Blickrichtung des ersten Nutzers in den veränderten Videobilddaten noch realistischer den Eindruck vermitteln, als sitze der erste Nutzer dem zweiten Nutzer gegenüber.

Gemäß des erfindungsgemäßen Videokonferenzverfahrens wird mittels der erfassten Blickrichtung des ersten Nutzers bestimmt, ob der erste Nutzer einen Punkt der ersten Anzeigevorrichtung betrachtet, und, wenn bestimmt wurde, dass ein Punkt der ersten Anzeigevorrichtung betrachtet wird, wird ermittelt, welches Objekt aktuell bei diesem Punkt von der ersten Anzeigevorrichtung dargestellt wird. Auf diese Weise kann insbesondere unterschieden werden, ob der erste Nutzer ein Gesicht betrachtet, welches von der ersten Anzeigevorrichtung wiedergegeben wird, oder ob der erste Nutzer ein anderes Objekt, welches von der ersten Anzeigevorrichtung dargestellt wird, betrachtet.

Wenn ermittelt worden ist, dass das Objekt die Darstellung des Gesichts des zweiten Nutzers ist, erscheint bei der Verarbeitung der Videobilddaten die Ziel-Blickrichtung des in den veränderten Videobilddaten dargestellten ersten Nutzers so, dass der erste Nutzer das auf der ersten Bildaufnahmevorrichtung dargestellte Gesicht des zweiten Nutzers betrachtet. Wenn das dargestellte Bild des zweiten Nutzers ausreichend groß ist, kann insbesondere in der Ziel-Blickrichtung unterschieden werden, wohin im dargestellten Gesicht des zweiten Nutzers der zweite Nutzer blickt. Dabei kann die Position der Augen, der Nase und/oder des Mundes bei der Darstellung des zweiten Nutzers mittels an sich bekannter Objekterkennungsverfahren ermittelt werden. Die Ziel-Blickrichtung des ersten Nutzers ist in den veränderten Videobilddaten dann so ausgerichtet, dass der erste Nutzer den jeweiligen Bereich des dargestellten Gesichtes des zweiten Nutzers betrachtet.

Gemäß des erfindungsgemäßen Videokonferenzverfahrens erscheint bei der Verarbeitung der Videobilddaten die Ziel-Blickrichtung des in den veränderten Videobilddaten dargestellten ersten Nutzers so, dass der erste Nutzer ein auf der ersten Anzeigevorrichtung dargestelltes Auge des zweiten Nutzers betrachtet, wenn ermittelt worden ist, dass das Objekt die Darstellung des Gesichts des zweiten Nutzers ist, jedoch nicht ermittelt wurde, welcher Bereich der Darstellung des Gesichts betrachtet wird. In diesem Fall wird somit ein direkter Blickkontakt durch die veränderten Videobilddaten hergestellt, wenn der erste Nutzer das dargestellte Gesicht des zweiten Nutzers auf der ersten Anzeigevorrichtung betrachtet.

Gemäß der Erfindung umfassen die von der ersten Anzeigevorrichtung wiedergegebenen Videobilddaten zumindest eine Darstellung der Augen mehrerer zweiter Nutzer, die von der zweiten Bildaufnahmevorrichtung und/oder weiteren zweiten Bildaufnahmevorrichtungen aufgenommen werden. In diesem Fall wird ermittelt, ob das Objekt die Darstellung des Gesichts eines bestimmten der mehreren zweiten Nutzer ist. Bei der Verarbeitung der Videobilddaten erscheint die Ziel-Blickrichtung des in den veränderten Videobilddaten dargestellten ersten Nutzers dann so, als wäre die erste Bildaufnahmevorrichtung auf der Geraden angeordnet, die durch einen ersten Umgebungsbereich der Augen des ersten Nutzers und durch einen zweiten Umgebungsbereich der auf der ersten Anzeigevorrichtung dargestellten Augen des bestimmten der mehreren zweiten Nutzer geht.

Diese Weiterbildung des erfindungsgemäßen Videokonferenzverfahrens umfasst die Konstellation, bei der mehrere Nutzer bei der zweiten Videokonferenzeinrichtung an der Videokonferenz teilnehmen, wobei die zweiten Nutzer von derselben Bildaufnahmevorrichtung aufgenommen werden oder gegebenenfalls an verschiedenen Orten von jeweils separaten Bildaufnahmevorrichtungen aufgenommen werden. Die Ziel-Blickrichtung des ersten Nutzers ist dann in den veränderten Videobilddaten so ausgebildet, dass der auf der ersten Anzeigevorrichtung angeschaute zweite Nutzer auf seiner zweiten Anzeigevorrichtung sieht, dass er von dem ersten Nutzer angeschaut wird. Die anderen zweiten Nutzer hingegen sehen auf ihren zweiten Anzeigevorrichtungen, dass sie nicht angeschaut werden.

Es gibt verschiedene Möglichkeiten, die Videobilddaten zu verändern und die Blickrichtung des ersten Nutzers in den veränderten Videobilddaten so anzupassen, dass sie der gewünschten Ziel-Blickrichtung entsprechen. Beispielsweise können bei der Bearbeitung der Videobilddaten die veränderten Videobilddaten durch ein Verfahren der künstlichen Intelligenz erzeugt werden.

Hierbei kann insbesondere ein so genanntes *Generative Adversarial Network* (GAN) oder ein daraus weiterentwickeltes Verfahren eingesetzt werden.

Gemäß einer Ausgestaltung des erfindungsgemäßen Videokonferenzverfahrens werden dementsprechend bei der Verarbeitung der Videobilddaten die veränderten Videobilddaten durch ein Generative Adversarial Network (GAN) mit einem Generator-Netzwerk und einem Diskriminator-Netzwerk erzeugt. Dabei erzeugt das Generator-Netzwerk geänderte Videobilddaten. Das Diskriminator-Netzwerk bewertet eine Ähnlichkeit zwischen der Darstellung des Kopfes des ersten Nutzers in den geänderten Videobilddaten und den aufgenommenen Videobilddaten. Ferner bewertet das Diskriminator-Netzwerk eine Übereinstimmung zwischen der Blickrichtung des ersten Nutzers in den geänderten Videobilddaten und der Ziel-Blickrichtung. Durch iterative Schritte können auf diese Weise insbesondere geänderte Videobilddaten erzeugt werden, welche eine Darstellung des ersten Nutzers enthalten, die dem ersten Nutzer sehr ähnlich ist, wobei jedoch die aufgenommene Blickrichtung in die Ziel-Blickrichtung geändert wurde. Es hat sich herausgestellt, dass bei der Verwendung eines Generative Adversarial Network geänderte Videobilddaten erzeugt werden können, welche eine realitätsnahe Darstellung des Kopfes des ersten Nutzers enthalten, wobei sich die Blickrichtung der Darstellung des ersten Nutzers in den geänderten Videobilddaten so in die Darstellung des Kopfes einfügt, dass die Darstellung des Kopfes des ersten Nutzers weiterhin realitätsnah ist. Es ergeben sich insbesondere keine Artefakte beim Übergang des unmittelbar die Augen umfassenden Bereichs, welcher insbesondere die Ziel-Blickrichtung bestimmt, in sich anschließende Bereiche der Darstellung des Kopfes.

Gemäß einer Weiterbildung des erfindungsgemäßen Videokonferenzverfahrens werden mittels der Verarbeitungseinheit die von der ersten Bildaufnahmevorrichtung aufgenommenen Videobilddaten, welche zumindest eine Darstellung des Kopfes des ersten Nutzers umfassen, so analysiert, dass ein Gefühlsausdruck des ersten Nutzers erfasst und einer oder mehreren Gefühlsausdruck-Klasse(n) zugeordnet wird. Das Diskriminator-Netzwerk bewertet in diesem Fall ferner eine Übereinstimmung zwischen der Gefühlsausdruck-Klasse bzw. den Gefühlsausdruck-Klassen der Darstellung des Kopfes des ersten Nutzers in den veränderten Videobilddaten und der zugeordneten Gefühlsausdruck-Klasse bzw. den Gefühlsausdruck-Klassen der Darstellung des Kopfes des ersten Nutzers in den aufgenommenen Videobilddaten. Auf diese Weise kann erreicht werden, dass das Generative Adversarial Network nicht nur eine Ähnlichkeit der Darstellung des Kopfes des ersten Nutzers erhält, sondern auch den Gefühlsausdruck der Darstellung des ersten Nutzers unverändert lässt. Beispielsweise kann die Verarbeitungseinheit ein Lächeln, ein Grinsen und/oder ein trauriges Gesicht des ersten Nutzers unterschiedlichen Gefühlsausdruck-Klassen zuordnen. Das Diskriminator-Netzwerk stellt dann sicher, dass auch in den veränderten Videobilddaten die Darstellung des Kopfes des ersten Nutzers ein Lächeln, ein Grinsen bzw. ein trauriges Gesicht zeigt.

Bei einer Videokonferenz ist nicht nur der Blickkontakt zwischen den Nutzern von besonderer Bedeutung, sondern auch die Gestik, die Mimik und der Gefühlsausdruck, der z. B. durch einen Gesichtsausdruck des jeweiligen Nutzers bestimmt wird. Der durch den Gesichtsausdruck vermittelte Gefühlsausdruck des ersten Nutzers wird bei der Verarbeitung der Videobilddaten bei dieser Weiterbildung des erfindungsgemäßen Videokonferenzverfahrens beibehalten, so dass die Konversation der Nutzer durch die Veränderung der Videobilddaten des ersten Nutzers nicht beeinträchtigt wird.

Gemäß einer anderen Ausgestaltung des erfindungsgemäßen Videokonferenzverfahrens wird bei der Verarbeitung der Videobilddaten ein Blickrichtungsbereich, der die Augen des ersten Nutzers wiedergibt, aus einem Restbereich extrahiert, wodurch Videobildteildaten erzeugt werden. Dieser Blickrichtungsbereich wird in den Videobildteildaten danach so verändert, dass die von der Darstellung der Augen vorgegebene Blickrichtung des ersten Nutzers in den veränderten Videobildteildaten dieses Blickrichtungsbereichs so erscheint, als wäre die erste Bildaufnahmevorrichtung auf der Geraden angeordnet. Dann werden die veränderten Videobildteildaten des Blickrichtungsbereichs wieder in den Restbereich der Videobilddaten eingesetzt, wodurch die veränderten Videobilddaten erzeugt werden. Vorteilhafterweise wird durch diese Ausgestaltung des Videokonferenzverfahrens sichergestellt, dass ein Restbereich außerhalb des Blickrichtungsbereichs bei den veränderten Videobilddaten unverändert bleibt. Hierdurch kann auf andere Weise sichergestellt werden, dass der Gesichtsausdruck bzw. der Gefühlsausdruck des ersten Nutzers bei den veränderten Videobilddaten erhalten bleibt und nur die Blickrichtung verändert wird.

Der Blickrichtungsbereich der Videobilddaten kann insbesondere in einen ersten Teilbereich, der die Darstellung eines ersten Auges des ersten Nutzers umfasst, und einen zweiten Teilbereich, die die Darstellung eines zweiten Auges des ersten Nutzers umfasst, unterteilt sein.

Gemäß einer anderen Ausgestaltung umfasst der Blickrichtungsbereich der Videobilddaten die Darstellung eines Kopfes des ersten Nutzers. Der Restbereich umfasst dann einen Hintergrund der Darstellung des Kopfes. In diesem Fall wird die Blickrichtung der Darstellung des ersten Nutzers durch eine Veränderung der Darstellung des Kopfes des ersten Nutzers verändert.

Beispielsweise kann die Darstellung des Kopfes gedreht werden, um die Blickrichtung der Darstellung des ersten Nutzers zu verändern.

Gemäß einer Weiterbildung des erfindungsgemäßen Videokonferenzverfahrens werden initial mehrere Bilder des ersten Nutzers aufgenommen und gespeichert, bei denen der Blickrichtungsbereich des ersten Nutzers verschiedene Blickrichtungen definiert, ohne dass die Pose des Kopfes des ersten Nutzers verändert wird. Die durch die Verarbeitung der Videobilddaten zu erzeugende veränderte Ziel-Blickrichtung des ersten Nutzers wird in diesem Fall mit den Blickrichtungen der gespeicherten Bilder verglichen. Es wird dann ein Bild ausgewählt, bei welchem die Blickrichtung der zu erzeugenden veränderten Ziel-Blickrichtung des ersten Nutzers am nächsten kommt. Bei der Verarbeitung der Videobilddaten wird das ausgewählte Bild verwendet, um die veränderten Videobildteildaten und/oder Videobilddaten zu erzeugen. Auf diese Weise kann eine sehr realitätsnahe Darstellung des ersten Nutzers in den veränderten Videobilddaten erzeugt werden, da die veränderten Videobilddaten einem Bild entsprechen, welches initial von dem ersten Nutzer aufgenommen und gespeichert wurde.

In entsprechender Weise können auch verschiedene Gesichtsausdrücke oder Gefühlsausdrücke des ersten Nutzers initial aufgenommen und gespeichert werden. Bei der Auswahl des Bildes wird dann nicht nur berücksichtigt, dass die Blickrichtung in der Darstellung des ersten Nutzers in dem Bild der Ziel-Blickrichtung entspricht, sondern dass auch die Gesichtsausdrücke bzw. Gefühlsausdrücke in der aufgenommenen Darstellung des ersten Nutzers und dem Bild übereinstimmen.

Die initiale Aufnahme der Bilder des ersten Nutzers kann beispielsweise dadurch erfolgen, dass der erste Nutzer verschiedene Punkte auf der ersten Anzeigevorrichtung betrachtet. Dabei wird die Blickrichtung des ersten Nutzers erfasst und gemeinsam mit den aufgenommenen Bildern gespeichert.

Gemäß einer Weiterbildung des erfindungsgemäßen Videokonferenzverfahrens können die veränderten Videobildteildaten des Blickrichtungsbereichs wieder in den Restbereich der Videobilddaten so eingesetzt werden, dass die veränderten Videobilddaten durch Verfahren der künstlichen Intelligenz so erzeugt werden, dass sich ein für die menschliche Wahrnehmung natürliches Bild ergibt. Dabei kann wiederum ein Generative Adversarial Network eingesetzt werden.

Gemäß einer weiteren Ausgestaltung des erfindungsgemäßen Videokonferenzverfahrens ist der Blickrichtungsbereichs in eine Randzone, eine Augenzone, welche die Darstellung der Iris einschließlich der Pupille zumindest eines der Augen des ersten Nutzers umfasst, und eine Übergangszone zwischen der Randzone und der Augenzone unterteilt. Bei der Verarbeitung der Videobilddaten wird der Blickrichtungsbereich dann so verändert, dass die Augenzone so verändert wird, dass die Ziel-Blickrichtung der Darstellung des ersten Nutzers in den veränderten Videobilddaten der Augenzone so erscheint, als wäre die erste Bildaufnahmevorrichtung auf der Geraden angeordnet, die Darstellung in der Randzone nahtlos an die Darstellung benachbarter Bereiche des Restbereichs anschließt und in der Übergangszone die Videobilddaten so verändert werden, dass sich ein Übergang von der veränderten Darstellung in der Augenzone zu der Darstellung in der Randzone ergibt. Auf diese Weise kann ein natürliches Erscheinungsbild der Darstellung des ersten Nutzers mit der Ziel-Blickrichtung erzeugt werden.

Gemäß einer weiteren Ausgestaltung des erfindungsgemäßen Videokonferenzverfahrens umfassen die von der ersten Bildaufnahmevorrichtung aufgenommenen Videobilddaten zumindest eine Darstellung des Kopfes des ersten Nutzers. Ferner wird in den aufgenommenen Videobilddaten die Pose des Kopfes des ersten Nutzers ermittelt und die Blickrichtung des ersten Nutzers wird dann aus der ermittelten Pose des Kopfes des ersten Nutzers erfasst. Hierdurch kann die Blickrichtung des ersten Nutzers auf einfache Weise erfasst werden, da die Position der Pupillen nicht bestimmt werden muss. Die Blickrichtung wird nur aus der Pose des Kopfes gewonnen.

Gemäß einer Weiterbildung des erfindungsgemäßen Videokonferenzverfahrens werden bei der Verarbeitung der aufgenommenen Videobilddaten folgende Schritte ausgeführt:
a) Erstellen eines verformbaren dreidimensionalen Modells des Kopfes des ersten Nutzers,
b) Projizieren der aufgenommenen Videobilddaten in das erstellte dreidimensionale Modell des ersten Nutzers, sodass eine erste dreidimensionale Repräsentation des von der ersten Bildaufnahmevorrichtung aufgenommenen Kopfes des ersten Nutzers erstellt wird, wobei diese erste dreidimensionale Repräsentation zumindest einen Lückenbereich aufweist, der sich durch verdeckte Bereiche des Kopfes des ersten Nutzers ergibt, die in den aufgenommenen Videobilddaten nicht sichtbar sind,
c) Berechnen einer Textur zum Auffüllen des Lückenbereichs,
d) Erzeugen einer zweiten dreidimensionalen Repräsentation des Kopfes des ersten Nutzers, bei welcher der Lückenbereich mit der berechneten Textur ausgefüllt ist, und
e) Verändern der aufgenommenen Videobilddaten derart, dass der Kopf des ersten Nutzers mittels der zweiten dreidimensionale Repräsentation so dargestellt wird, dass die Ziel-Blickrichtung des Kopfes des ersten Nutzers in den veränderten Videobilddaten dargestellten ersten Nutzers so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht.

Das im Schritt a) erzeugte dreidimensionale Modell des Kopfes umfasst insbesondere parametrisierte Knotenpunkte, sodass das dreidimensionale Modell des Kopfes von einem Parametersatz mit einer Vielzahl von Parametern definiert ist.

Die Parameter für das im Schritt a) erzeugte dreidimensionale Modell umfassen insbesondere Kopfbeschreibungs-Parameter und Gesichtsausdrucks-Parameter, wobei die Kopfbeschreibungs-Parameter für verschiedene Nutzer individuell bestimmt werden und die Gesichtsausdrucks-Parameter für die aufgenommenen Videobilddaten bestimmt werden. Die Gesichtsausdrucks-Parameter werden insbesondere für jeden Videoframe der aufgenommenen Videobilddaten neu bestimmt.

Gemäß einer Weiterbildung des erfindungsgemäßen Videokonferenzverfahrens umfasst die zweite Repräsentation des Kopfes des ersten Nutzers keine dreidimensionale Darstellung von Körperteilen, deren Größe geringer als ein Grenzwert ist. Diese Körperteile werden dann als Textur in der zweiten Repräsentation dargestellt. Der Grenzwert liegt beispielsweise in einem Bereich von 1 mm bis 3 mm. Beispielsweise werden die Pupillen, Augenlider und/oder Augenbrauen nur als Textur dargestellt.

Die Kopfbeschreibungs-Parameter und die Gesichtsausdrucks-Parameter umfassen insbesondere jeweils Koeffizienten.

Gemäß einer Weiterbildung des erfindungsgemäßen Videokonferenzverfahrens werden die Koeffizienten der Kopfbeschreibungs-Parameter durch ein Maschinenlernverfahren gewonnen, bei dem eine Korrektur von Koeffizienten der Kopfbeschreibungs-Parameter durch eine Projektion der in den aufgenommenen Videobilddaten enthaltenen Darstellung des Kopfes des ersten Nutzers in das dreidimensionale Modell des Kopfes des ersten Nutzers berechnet wird.

Bei dem Training des Maschinenlernverfahrens bleibt in diesem Fall insbesondere der zumindest eine Lückenbereich unberücksichtigt. Zum Beispiel wird bei der Verlustfunktion eines neuronalen Netzes der Lückenbereich nicht mittrainiert.

Gemäß einer Weiterbildung des erfindungsgemäßen Videokonferenzverfahrens wird bei der Korrektur der Kopfbeschreibungs-Parameter die Projektion der in den aufgenommenen Videobilddaten enthaltenen Darstellung des Kopfes des ersten Nutzers in das dreidimensionale Modell des Kopfes des ersten Nutzers einem geometrischen Modellierungsprozess zur Herstellung eines zweidimensionalen Bildes unterzogen wird, welches die Projektion in das dreidimensionale Modell repräsentiert. Ein solcher geometrische Modellierungsprozess wird auch als UV-Mapping bezeichnet. Es wird in diesem Fall somit kein Generative Adversarial Network (GAN) eingesetzt. Stattdessen wird ein UV-Mapping durchgeführt.

Im Einzelnen können die Kopfbeschreibungs-Parameter insbesondere durch ein Maschinenlernverfahren gewonnen werden, das wie folgt trainiert wurde:
- Erzeugen von Testkoeffizienten für einen Startvektor und einen ersten und zweiten Kopfbeschreibungs-Parameter und einen ersten und zweiten Gesichtsausdruckbeschreibungs-Parameter, wobei die Testkoeffizienten für den ersten und zweiten Kopfbeschreibungs-Parameter und den ersten und zweiten Gesichtsausdruckbeschreibungs-Parameter bis auf jeweils einen zu bestimmenden Koeffizienten identisch sind,
- Erzeugen einer Testdarstellung eines Kopfes mit den Testkoeffizienten für den Startvektor und den zweiten Kopfbeschreibungs-Parameter und den zweiten Gesichtsausdruckbeschreibungs-Parameter,
- Abrufen einer Bildfarbe für jeden Knotenpunkt mit den Testkoeffizienten für den Startvektor und den ersten Kopfbeschreibungs-Parameter und den ersten Gesichtsausdruckbeschreibungs-Parameter und
- Eingeben der abgerufenen Bildfarben in das Maschinenlernverfahren und Optimieren der Parameter des Maschinenlernverfahrens, so dass die Differenz des Ergebnisses des Maschinenlernverfahrens zu dem zu bestimmenden Koeffizienten der zweiten Kopfbeschreibungs- und Gesichtsausdruckbeschreibungs-Parameter minimiert wird.

Gemäß einer Weiterbildung des erfindungsgemäßen Videokonferenzverfahrens werden im Schritt c) mittels eines Maschinenlernverfahrens Farben des Lückenbereichs anhand von Farben der aufgenommenen Videobilddaten vorhergesagt werden.

Insbesondere wird im Schritt c) beim Berechnen einer Textur zum Auffüllen des Lückenbereichs ein geometrischer Modellierungsprozess zur Erstellung eines zweidimensionalen Bildes, welches die im Schritt b) gewonnene Projektion in das dreidimensionale Modell repräsentiert, durchgeführt und das erstellte zweidimensionale Bild wird zum Training eines Generative Adversarial Network (GAN) verwendet.

Es hat sich als vorteilhaft herausgestellt, die geänderten Videobilddaten nicht allein mit einem GAN zu berechnen, da Artefakte auftreten können. Die Verwendung eines GAN zum Berechnen der geänderten Videobilddaten ist schwer kontrollierbar. Vorteilhafterweise wird daher erfindungsgemäß das GAN nur zum Auffüllen des Lückenbereichs im dreidimensionalen Modell verwendet. Hierfür wird wiederum ein zweidimensionales Bild verwendet, welches durch UV Mapping gewonnen wurde, um dann ein Generative Adversarial Network (GAN) zu trainieren.

Im Einzelnen kann die Textur zum Auffüllen des Lückenbereichs im Schritt c) insbesondere durch ein Maschinenlernverfahren berechnet werden, das mit folgenden Schritten trainiert wurde:
c1) Bereitstellen eines Videoframes aus Trainingsvideobilddaten,
c2) Schätzen von Parametern des dreidimensionalen Modells des Kopfes des ersten Nutzers (5),
c3) Projizieren des bereitgestellten Videoframes in das dreidimensionale Modell des ersten Nutzers (5) mit den geschätzten Parametern,
c4) Erstellen eines zweidimensionalen Bildes, welches die im Schritt c3) erstellte Projektion repräsentiert und welches den Lückenbereich enthält,
c5) Erstellen eines modifizierten zweidimensionalen Bildes durch Anwenden einer Maskierung auf das im Schritt c4) erstellte zweidimensionale Bild, wobei durch die Maskierung der Lückenbereich vergrößert wird,
c6) Eingeben des im Schritt c5) erstellten modifizierten zweidimensionalen Bildes in das Training des Generative Adversarial Network (GAN), wobei in der Verlustfunktion die Differenz des zweidimensionalen Bildes und des modifizierten zweidimensionalen Bildes betrachtet wird.

Bei dem erfindungsgemäßen Verfahren werden die aufgenommenen Videobilddaten so verändert, dass der Kopf des ersten Nutzers so dargestellt wird, dass die Ziel-Blickrichtung so erscheint, als wäre die erste Bildaufnahmevorrichtung auf einer Geraden angeordnet, die durch einen ersten Umgebungsbereich der Augen des ersten Nutzers und durch einen zweiten Umgebungsbereich der auf der ersten Anzeigevorrichtung dargestellten Augen des zweiten Nutzers geht. Hierfür wird das dreidimensionale Modell gedreht, um den Kopf in eine Position mit der gewünschten Blickrichtung zu bringen. Eine Herausforderung dabei ist, dass der Gesichtsausdruck erhalten bleibt. In dieser Hinsicht weicht die Drehung des dreidimensionalen Modells von der reinen Rotation ab. Es werden erfindungsgemäß statistische Hintergrundinformationen genutzt, um den Gesichtsausdruck bei der Drehung zu erhalten. Beispielsweise kann die Information verwendet werden, dass ein Absenken des Kinns auch andere Gesichtspartien in bestimmter Weise ändert. Diese statistischen Hintergrundinformationen können dann verwendet werden, andere Gesichtsbereiche anders als bei der reinen geometrischen Drehung zu verändern. Erfindungsgemäß wird somit ein deformierbares dreidimensionales Modell mit Informationen über den Gesichtsausdruck geschaffen.

Gemäß einer Weiterbildung des erfindungsgemäßen Videokonferenzverfahrens werden von der ersten Bildaufnahmevorrichtung aufeinanderfolgende Videoframes aufgenommen und zumindest temporär gespeichert. Bei der Verarbeitung der Videobilddaten werden dann fehlende Bildelemente des Restbereichs aus gespeicherten Videoframes übernommen. Alternativ können die fehlenden Bildelemente des Restbereichs synthetisiert werden, beispielsweise durch Verfahren der künstlichen Intelligenz. Bei der Änderung der Blickrichtung bei der Darstellung des ersten Nutzers können Bildteile sichtbar werden, welche bei der aufgenommenen Darstellung des ersten Nutzers nicht sichtbar waren. Solche fehlenden Bildbereiche müssen ergänzt werden, um weiterhin eine realistische Darstellung zu erreichen. Diese Ergänzungen können vorteilhafterweise zuvor gespeicherten Videoframes entnommen werden oder sie können synthetisiert werden.

Gemäß einer anderen Ausgestaltung des erfindungsgemäßen Videokonferenzverfahrens werden von der ersten Bildaufnahmevorrichtung aufeinanderfolgende Videoframes aufgenommen und bei einer Blickrichtungsänderung des ersten Nutzers werden bei der Verarbeitung der Videobilddaten einige Videoframes so interpoliert, dass die von den veränderten Videobilddaten wiedergegebene Blickrichtungsänderung verlangsamt ist. Insbesondere bei einem Gespräch mit mehreren Gesprächspartnern können

Blickrichtungsänderungen zu plötzlich erscheinen, wenn zum Beispiel der Kopf gedreht wird.

Um eine solche Bewegung bei einer Blickrichtungsänderung natürlich wirken zu lassen, können einige Videoframes interpoliert werden, wodurch die Bewegung bei der Blickrichtungsänderung verlangsamt dargestellt wird.

Wie bei herkömmlichen Videokonferenzverfahren werden die veränderten Videobilddaten von der zweiten Anzeigevorrichtung in Echtzeit oder nahezu in Echtzeit wiedergegeben. Es kann sich nur eine geringfügige Latenz ergeben, welche durch die Übertragung und Verarbeitung der Videobilddaten an die jeweils andere Videokonferenzeinrichtung verursacht wird.

Des Weiteren werden bei dem Videokonferenzverfahren insbesondere nicht nur die von der ersten Bildaufnahmevorrichtung aufgenommenen Videobilddaten zur Darstellung auf der zweiten Anzeigevorrichtung so verarbeitet, dass sich die Blickrichtung bei der Darstellung des ersten Nutzers verändert, sondern es werden gleichermaßen die von der zweiten Bildaufnahmevorrichtung aufgenommenen Videobilddaten des zweiten Nutzers entsprechend für die Wiedergabe auf der ersten Anzeigevorrichtung geändert. Auf diese Weise ergibt sich bei den jeweiligen Darstellungen auf den beiden Anzeigevorrichtungen eine sehr realitätsnahe Darstellung des jeweils anderen Nutzers insbesondere hinsichtlich seiner Blickrichtung und optional auch hinsichtlich seines Gefühlsausdrucks bzw. Gesichtsausdrucks.

Das entsprechende Videokonferenzsystem ist in Anspruch 14 definiert.

Das erfindungsgemäße Videokonferenzsystem ist insbesondere ausgebildet, das vorstehend beschriebene Videokonferenzverfahren auszuführen. Es weist somit dieselben Vorteile auf.

Im Folgenden werden Ausführungsbeispiele der Erfindung mit Bezug zu den Zeichnungen erläutert:
- Fig. 1: zeigt den Aufbau eines Ausführungsbeispiels des erfindungsgemäßen Videokonferenzsystems,
- Fig. 2: veranschaulicht die Geometrie der Blickrichtung des ersten Nutzers,

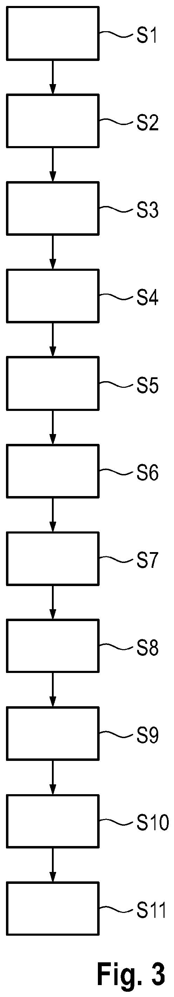

- Fig. 3: zeigt den Ablauf eines ersten Ausführungsbeispiels des erfindungsgemäßen Verfahrens,
- Fig. 4: zeigt eine erste Aufteilung aufgenommener Videobilddaten,
- Fig. 5: zeigt eine zweite Aufteilung aufgenommener Videobilddaten,
- Fig. 6: zeigt eine Aufteilung eines Blickrichtungsbereichs,
- Fig. 7: zeigt den Ablauf eines zweiten Ausführungsbeispiels des erfindungsgemäßen Verfahrens und
- Fig. 8: veranschaulicht die Gewinnung von Knotenpunkten bei einem dritten Ausführungsbeispiel des erfindungsgemäßen Verfahrens.

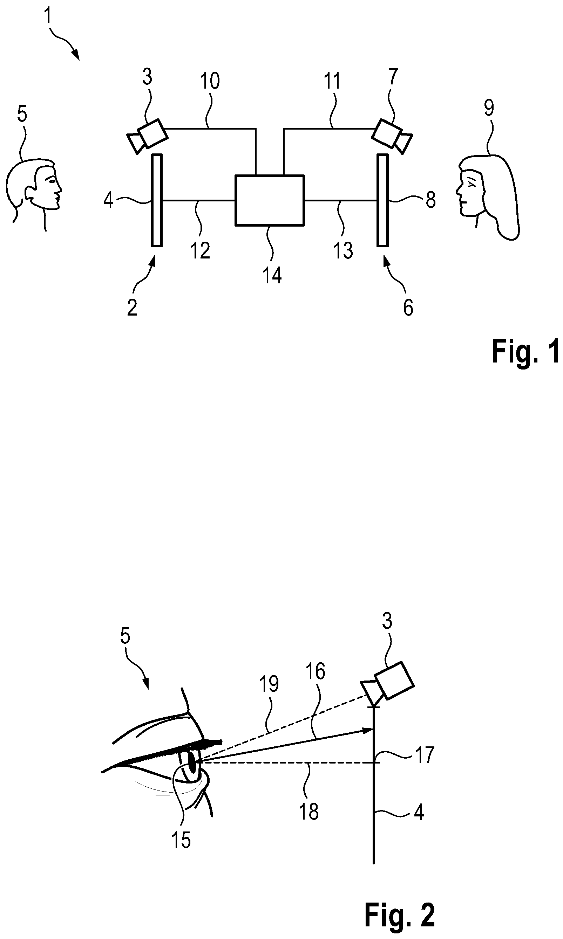

Mit Bezug zu den Figuren 1 und 2 wird das Ausführungsbeispiel des erfindungsgemäßen Videokonferenzsystems 1 erläutert:
Das Videokonferenzsystem 1 umfasst eine erste Videokonferenzeinrichtung 2 mit einer ersten Bildaufnahmevorrichtung 3, beispielsweise einer ersten Kamera, und einer ersten Anzeigevorrichtung 4, beispielsweise einem Display mit einer Anzeigefläche. In Aufnahmerichtung der ersten Bildaufnahmevorrichtung 3 befindet sich ein erster Nutzer 5, welcher die Wiedergabe der ersten Anzeigevorrichtung 4 betrachten kann, während er von der ersten Bildaufnahmevorrichtung 3 aufgenommen wird. Bei dem Ausführungsbeispiel wird zumindest der Kopf des ersten Nutzers 5 von der ersten Bildaufnahmevorrichtung 3 aufgenommen.

Entfernt von der ersten Videokonferenzeinrichtung 2 ist eine entsprechende zweite Videokonferenzeinrichtung 6 angeordnet. Diese umfasst eine zweite Bildaufnahmevorrichtung 7, die auch als Kamera ausgebildet sein kann, und eine zweite Anzeigevorrichtung 8, beispielsweise ein Display mit einer Anzeigefläche. Vor der zweiten Videokonferenzeinrichtung 6 befindet sich ein zweiter Nutzer 9, welcher von der zweiten Bildaufnahmevorrichtung 7 aufgenommen werden kann, während er gleichzeitig die Wiedergabe der zweiten Anzeigevorrichtung 8 betrachtet.

Über die Datenverbindungen 10 bis 13 sind die beiden Bildaufnahmevorrichtungen 3 und 7 sowie die beiden Anzeigevorrichtungen 4 und 8 mit einer Verarbeitungseinheit 14 gekoppelt. Die Datenverbindungen 10 bis 13 können zumindest zum Teil Datenfernverbindungen, beispielsweise über das Internet, sein. Die Verarbeitungseinheit 14 kann bei der ersten Videokonferenzeinrichtung 2, der zweiten Videokonferenzeinrichtung 6 oder bei einem separaten Server angeordnet sein. Die Verarbeitungseinheit 14 kann bei der ersten oder zweiten Videokonferenzeinrichtung 2, 6 angeordnet sein. Ferner kann sie bei einem zentralen Server oder auch auf mehrere Server oder Verarbeitungseinheiten aufgeteilt seien, beispielsweise jeweils eine Verarbeitungseinheit für jeden Nutzer. Des Weiteren könnte die Verarbeitungseinheit 14 auf Einheiten bei der ersten und der zweiten Videokonferenzeinrichtung 2, 6 und optional einen separaten Server aufgeteilt seien, sodass bei der einen Videokonferenzeinrichtung die Aufnahme der Videobilddaten und bei der anderen Videokonferenzeinrichtung und/oder dem separaten Server die Verarbeitung der Videobilddaten erfolgt.

Ferner können auch statt der Videobilddaten nur Metadaten übertragen werden, aus denen dann erst die empfängerseitige zweite Videokonferenzeinrichtung 6 die anzuzeigenden Videobilddaten synthetisiert. Durch eine solche Kompression könnte die Bandbreite für die Datenübertragung gesenkt werden.

Wie in Fig. 2 gezeigt, betrachtet der erste Nutzer 5 mit einer Blickrichtung 16 ausgehend von der Position 15 mit einem seiner Augen einen Punkt auf der ersten Anzeigevorrichtung 4. Dabei kann die erste Bildaufnahmevorrichtung 3 den ersten Nutzer 5 aus einer Aufnahmerichtung 19 aufnehmen. Gleichzeitig kann die erste Anzeigevorrichtung 4 bei einer Videokonferenz Videobilddaten wiedergeben, welche von der zweiten Bildaufnahmevorrichtung 7 von dem Kopf des zweiten Nutzers 9 aufgenommen wurden. Dabei wird mindestens ein Auge des zweiten Nutzers 9 bei einer Position 17 von der ersten Anzeigevorrichtung 4 dargestellt.

Die Verarbeitungseinheit 14 ist ausgebildet, die von der ersten Bildaufnahmevorrichtung 3 aufgenommenen Videobilddaten zu empfangen und zu verarbeiten und die verarbeiteten Videobilddaten an die zweite Anzeigevorrichtung 8 der zweiten Videokonferenzeinrichtung 6 zu übertragen, so dass die zweite Anzeigevorrichtung 8 diese verarbeiteten Videobilddaten wiedergeben kann. In gleicher Weise ist die Verarbeitungseinheit 14 ausgebildet, die von der zweiten Bildaufnahmevorrichtung 7 aufgenommenen Videobilddaten zu empfangen und zu verarbeiten und die verarbeiteten Videobilddaten an die erste Anzeigevorrichtung 4 der ersten Videokonferenzeinrichtung 2 zu übertragen, welche die verarbeiteten Videobilddaten dann wiedergeben kann. Wie es im Folgenden mit Bezug zu den Ausführungsbeispielen der erfindungsgemäßen Verfahren erläutert wird, ist die Verarbeitungseinheit 14 dabei ausgebildet, bei der Verarbeitung der Videobilddaten die Blickrichtung 16 des dargestellten ersten Nutzers 5 zu erfassen und in den Videobilddaten die Wiedergabe eines die Augen umfassenden Bereichs 20 des Kopfes des ersten Nutzers 5 so zu verändern, dass eine Ziel-Blickrichtung des ersten Nutzers 5 in den veränderten Videobilddaten so erscheint, als wäre die erste Bildaufnahmevorrichtung 3 auf einer Geraden 18, die durch eines der Augen des ersten Nutzers 5 und durch eines der auf der ersten Anzeigevorrichtung 4 dargestellten Augen des zweiten Nutzers 9 geht.

Im Folgenden wird ein erstes Ausführungsbeispiel des erfindungsgemäßen Verfahrens erläutert, wobei des Weiteren die Ausbildung des erfindungsgemäßen Videokonferenzsystems, insbesondere der Verarbeitungseinheit 14, näher beschrieben wird.

In einem Schritt S1 wird der Kopf des ersten Nutzers 5 von der ersten Bildaufnahmevorrichtung 3 aufgenommen. Gleichzeitig werden in einem Schritt S2 von der ersten Anzeigevorrichtung 4 Videobilddaten wiedergegeben, welche eine Darstellung des Kopfes des zweiten Nutzers 9 umfassen. Diese Videobilddaten werden von der zweiten Bildaufnahmevorrichtung 7 aufgenommen und ggf. von der Verarbeitungseinheit 14 geändert. Die von der ersten Anzeigevorrichtung 4 angezeigten Videobilddaten zeigen ein Auge des zweiten Nutzers 9 bei der Position 17 (siehe Fig. 2).

In einem Schritt S3 werden die von der ersten Bildaufnahmevorrichtung 3 aufgenommenen Videobilddaten über die Datenverbindung 10 an die Verarbeitungseinheit 14 übertragen.

In einem Schritt S4 wird die Darstellung des Gesichts des ersten Nutzers 5 in den von der Verarbeitungseinheit 14 empfangenen Videobilddaten extrahiert.

In einem Schritt S5 wird die Blickrichtung des ersten Nutzers 5 anhand der extrahierten Darstellung des Gesichts erfasst. Es können hierfür an sich bekannte Eye-Tracking-Verfahren verwendet werden.

In einem Schritt S6 wird die aktuelle Position 17 der Darstellung eines Auges des zweiten Nutzers 9 auf der ersten Anzeigevorrichtung 4 ermittelt. Alternativ kann auch der Mittelpunkt zwischen der Darstellung der beiden Augen des zweiten Nutzers 9 als Punkt 17 bestimmt werden. Ferner wird die Ausrichtung der Geraden 18 berechnet, welche durch die Position 15 eines Auges der ersten Nutzers 5 und die Position 17 geht. Auch in diesem Fall könnte die Position 15 alternativ als der Mittelpunkt zwischen den beiden Augen des ersten Nutzers 5 definiert werden.

Anschließend wird in einem Schritt S7 eine Ziel-Blickrichtung für veränderte Videobilddaten in der Darstellung des ersten Nutzers 5 berechnet. Die Ziel-Blickrichtung wird dabei so bestimmt, dass der dargestellte erste Nutzer in den veränderten Videobilddaten so erscheint, als wäre die erste Bildaufnahmevorrichtung 3 auf der Geraden 18 angeordnet, insbesondere bei der Position 17 oder auf der Geraden 18 hinter der ersten Anzeigevorrichtung 4.

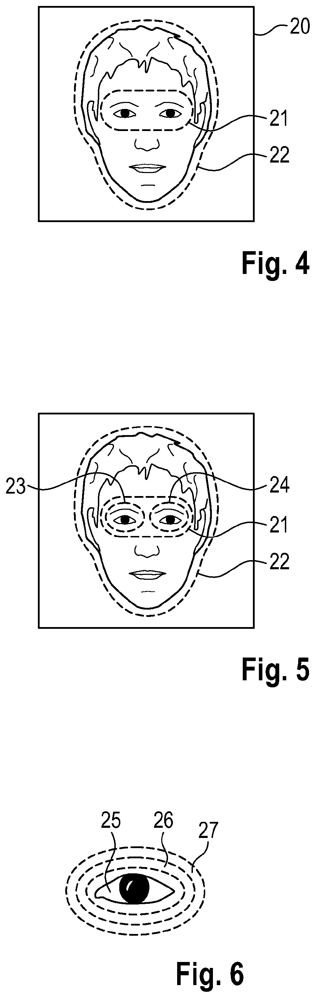

In einem Schritt S8 wird der aufgenommene, die Augen des ersten Nutzers 5 umfassende Bereich 20, wie in Fig. 4 gezeigt, in einem Blickrichtungsbereich 21, welcher die Darstellung beider Augen des ersten Nutzers 5 umfasst, und einen Restbereich 22 des extrahierten Gesichts des ersten Nutzers 5 aufgeteilt.

In einem Schritt S9 wird der Blickrichtungsbereich 21 in den zugehörigen Videobildteildaten so verändert, dass die von der Darstellung der Augen vorgegebene Blickrichtung 16 des ersten Nutzers 5 in den veränderten Videobildteildaten dieses Blickrichtungsbereichs 21 so erscheint, als wäre die erste Bildaufnahmevorrichtung 3 bei der Position 17 angeordnet. Hierfür können initial mehrere Bilder des ersten Nutzers 5 aufgenommen und gespeichert worden sein, bei denen der erste Nutzer 5 verschiedene Blickrichtungen 16 besitzt. Bei diesen initial aufgenommenen Bildern des ersten Nutzers 5 hat dieser die Pose seines Kopfes unverändert belassen und nur mit seinen Augen die Blickrichtung 16 verändert. Für die Veränderung der Videobildteildaten des Blickrichtungsbereichs 21 wird dann ein gespeichertes Bild ausgewählt, bei welchem die Blickrichtung der berechneten Ziel-Blickrichtung des ersten Nutzers 5 am nächsten kommt. Aus diesem gespeicherten Bild wird ein Blickrichtungsbereich extrahiert, welcher dem Blickrichtungsbereich 21 entspricht. Der Blickrichtungsbereich 21 wird dann durch den extrahierten Blickrichtungsbereich ersetzt. Alternativ können die veränderten Videobildteildaten des Blickrichtungsbereichs 21 auch durch Verfahren der künstlichen Intelligenz synthetisiert werden.

In einem Schritt S10 werden die veränderten Videobildteildaten des Blickrichtungsbereichs 21 wieder in den Restbereich 22 der Darstellung des Gesichts des ersten Nutzers 5 eingesetzt. Der Restbereich 22 mit den eingesetzten veränderten Videobildteildaten des BlickRichtungsbereichs 21 wird dann in einen weiteren Restbereich der Videobilddaten der ersten Bildaufnahmevorrichtung 3 eingesetzt, wodurch die veränderten Videobilddaten erzeugt werden.

In einem Schritt S11 werden von der Verarbeitungseinheit 14 die veränderten Videobilddaten über die Datenverbindung 13 an die zweite Anzeigevorrichtung 8 übertragen, welche die veränderten Videobilddaten wiedergibt. Diese können dann von dem zweiten Nutzer 9 betrachtet werden. Die Blickrichtung der Darstellung des ersten Nutzers 5 auf der zweiten Anzeigevorrichtung 8 erscheint dann in einer Weise, als wäre der zweite Nutzer 9 mit einem seiner Augen bei der Position 17 gegenüber dem ersten Nutzer 5. Es wird somit eine sehr realitätsnahe Darstellung des ersten Nutzers 5 auf der zweiten Anzeigevorrichtung 8 erzeugt. Wenn der erste Nutzer 5 in diesem Fall direkt auf die Darstellung eines Auges des zweiten Nutzers 9 bei der Position 17 blickt, ergibt sich auch bei der Darstellung des ersten Nutzers 5 auf der zweiten Anzeigevorrichtung 8 ein Blickkontakt mit dem zweiten Nutzer 9. Auch wenn die Blickrichtung 16 des ersten Nutzers 5 auf eine andere Position der ersten Anzeigevorrichtung 4 oder auch außerhalb der ersten Anzeigevorrichtung 4 gerichtet ist, wird diese Blickrichtung von der zweiten Anzeigevorrichtung 8 so wiedergegeben, als wäre die erste Bildaufnahmevorrichtung bei dem dargestellten Auge des zweiten Nutzers 9 angeordnet.

Bei einer anderen Ausgestaltung des ersten Ausführungsbeispiels des erfindungsgemäßen Verfahrens wird in Schritt S8 der Blickrichtungsbereich 21 noch, wie in Fig. 5 gezeigt, in einen ersten Teilbereich 23, der die Darstellung eines ersten Auges des ersten Nutzers 5 umfasst, und einem zweiten Teilbereich 24, der die Darstellung eines zweiten Auges des ersten Nutzers umfasst, unterteilt. Im Schritt S9 werden dann die Teilbereiche 23 und 24 so verändert, dass sich die Ziel-Blickrichtung des ersten Nutzers 5 ergibt.

Wie in Fig. 6 gezeigt, ist jeder Teilbereich 23 und 24 des Blickrichtungsbereichs 21 in eine Augenzone 25, eine Übergangszone 26 und eine Randzone 27 unterteilt. Die Augenzone 25 umfasst dabei die Darstellung der Pupille und der Iris des jeweiligen Auges des ersten Nutzers 5. Die Übergangszone 26 ist zwischen der Randzone 27 und der Augenzone 25 angeordnet. Im Schritt S9 wird die Augenzone 25 so verändert, dass sich die Ziel-Blickrichtung der Darstellung des ersten Nutzers 5 in den veränderten Videobilddaten der Augenzone 25 ergibt. Die Videobilddaten für die Darstellung der Randzone 27 wird nicht oder nur unwesentlich verändert, so dass sie sich nahtlos an die Darstellung benachbarter Bereiche des Blickrichtungsbereichs 21 bzw. des Restbereichs 22 anschließt. Die Videobilddaten für die Übergangszone 26 werden so verändert, dass sich ein Übergang von der veränderten Darstellung der Augenzone 25 zu der Darstellung in der Randzone 27 ergibt.

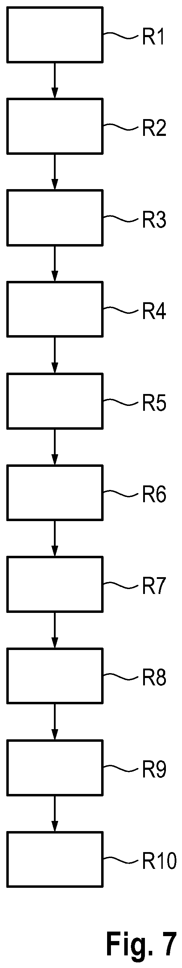

Im Folgenden wird ein zweites Ausführungsbeispiel des erfindungsgemäßen Verfahrens mit Bezug zu Fig. 7 beschrieben. In Verbindung mit dem zweiten Ausführungsbeispiel des erfindungsgemäßen Verfahrens wird eine alternative Ausgestaltung der Verarbeitungseinheit 14 gemäß einem zweiten Ausführungsbeispiel des erfindungsgemäßen Videokonferenzsystems 1 beschrieben:
Zunächst werden die Schritte R1 bis R7 ausgeführt, welche den vorstehend beschriebenen Schritten S1 bis S7 entsprechen.

In einem Schritt R8 wird die extrahierte Darstellung des Gesichts des ersten Nutzers 5 so analysiert, dass mittels des Gesichtsausdrucks ein Gefühlsausdruck des ersten Nutzers 5 erfasst wird. Dieser Gefühlsausdruck wird in der Verarbeitungseinheit 14 einer Gefühlsausdruck-Klasse zugeordnet.

In einem Schritt R9 werden die veränderten Videobilddaten des dargestellten ersten Nutzers 5 erzeugt, bei denen die Blickrichtung des ersten Nutzers 5 der Ziel-Blickrichtung entspricht. Hierfür wird bei dem zweiten Ausführungsbeispiel des erfindungsgemäßen Verfahrens ein Generative Adversarial Network (GAN) eingesetzt, welches in der Verarbeitungseinheit 14 implementiert ist. Dieses Generative Adversarial Network umfasst ein Generator-Netzwerk und eine Diskriminator-Netzwerk. Das Generator-Netzwerk erzeugt geänderte Videobilddaten. Das Diskriminator-Netzwerk bewertet eine Ähnlichkeit zwischen der Darstellung des Kopfes des ersten Nutzers 5 in den geänderten Videobilddaten, welche von dem Generator-Netzwerk erzeugt worden sind, und den von der ersten Bildaufnahmevorrichtung 3 aufgenommenen Videobilddaten. Des Weiteren bewertet das Diskriminator-Netzwerk eine Übereinstimmung zwischen der Blickrichtung des ersten Nutzers 5 in den geänderten Videobilddaten, welche von dem Generator-Netzwerk erzeugt wurden, und der Ziel-Blickrichtung. Das Diskriminator-Netzwerk gibt dem Generator-Netzwerk eine Rückkopplung, wobei geänderte Videobilddaten umso positiver bewertet werden, desto größer die Ähnlichkeit der Darstellung des Kopfes des ersten Nutzers in den geänderten Videobilddaten mit den aufgenommenen Videobilddaten ist und desto größer die Übereinstimmung der Blickrichtung des ersten Nutzers in den geänderten Videobilddaten mit der Ziel-Blickrichtung ist.

Des Weiteren bewertet das Diskriminator-Netzwerk eine Übereinstimmung zwischen der Gefühlsausdruck-Klasse der Darstellung des Kopfes des ersten Nutzers 5 in den geänderten Videobilddaten und der zugeordneten Gefühlsausdruck-Klasse der Darstellung des Kopfes des ersten Nutzers 5 in den aufgenommenen Videobilddaten. Je größer die Übereinstimmung ist, desto positiver ist die Bewertung des Diskriminator-Netzwerks. Auch diese Bewertung wird von dem Diskriminator-Netzwerk an das Generator-Netzwerk übergeben. In Abhängigkeit von den Bewertungen des Diskriminator-Netzwerks erzeugt das Generator-Netzwerk erneut in einem iterativen Prozess geänderte Videobilddaten. Auf diese Weise werden veränderte Videobilddaten erzeugt, bei denen eine große Ähnlichkeit der Darstellung des Kopfes mit den aufgenommenen Videobilddaten besteht, bei denen jedoch die Blickrichtung des ersten Nutzers der Ziel-Blickrichtung entspricht und bei denen der Gefühlsausdruck des ersten Nutzers in dieselbe Gefühlsausdruck-Klasse fällt, wie der Gefühlsausdruck des ersten Nutzers 5 in den aufgenommenen Videobilddaten.

In einem Schritt R10, welcher dem Schritt S11 des ersten Ausführungsbeispiels entspricht, werden die veränderten Videobilddaten an die zweite Anzeigevorrichtung 8 übertragen, welche sie wiedergibt.

Die von der ersten Bildaufnahmevorrichtung 3 aufgenommenen Videobilddaten sind in aufeinander folgende Videoframes unterteilt. Die Schritte der vorstehend beschriebenen Verfahren des ersten bzw. des zweiten Ausführungsbeispiels werden für jeden aufeinanderfolgenden Videoframe ausgeführt, so dass fortlaufende Videobilder erzeugt werden.

Bei dem ersten Ausführungsbeispiel des erfindungsgemäßen Verfahrens kann es sich dabei ergeben, dass durch die Veränderung der Videobilddaten in einem Restbereich, z. B. dem Restbereich 22, z. B. durch eine Drehung der Darstellung des Kopfes des ersten Nutzers 5, Bildelemente fehlen. Solche fehlenden Bildelemente können dann aus zuvor aufgenommenen Videoframes entnommen werden, welche den Inhalt dieser fehlenden Bildelemente zeigen und welche zumindest temporär hierfür gespeichert werden. Alternativ können solche fehlenden Bildelemente auch durch Verfahren der künstlichen Intelligenz synthetisiert werden.

Außerdem können sich bei der aufeinanderfolgenden Wiedergabe der Videoframes eine Darstellung von einer Blickrichtungsänderung, z. B. des ersten Nutzers 5, z. B. zu einem anderen Gesprächsteilnehmer ergeben. Eine solche Blickrichtungsänderung wird von der Verarbeitungseinheit 14 in den aufgenommenen Videobilddaten erkannt. In diesem Fall werden dann einige Videoframes so interpoliert, dass die von den veränderten Videobilddaten wiedergegebene Blickrichtungsänderung verlangsamt ist.

In einem weiteren Ausführungsbeispiel des erfindungsgemäßen Verfahrens, welches sowohl das erste als auch das zweite Ausführungsbeispiel ergänzen kann, wird im Schritt S5 bzw. R5 nicht nur die Blickrichtung 16 des ersten Nutzers 5 erfasst, sondern auch ermittelt, welches Objekt aktuell bei dem Schnittpunkt der Blickrichtung 16 mit der ersten Anzeigevorrichtung 4 dargestellt wird, sofern die Blickrichtung 16 auf die erste Anzeigevorrichtung 4 trifft. Dieses Objekt kann die Verarbeitungseinheit 14 anhand der Videobilddaten ermitteln, welche sie an die erste Anzeigevorrichtung 4 über die Datenverbindung 12 überträgt. Wenn ermittelt worden ist, dass das Objekt die Darstellung des Gesichts des zweiten Nutzers 9 ist, wird bei der Verarbeitung der Videobilddaten die Ziel-Blickrichtung des in den veränderten Videobilddaten dargestellten ersten Nutzers 5 so bestimmt, dass der erste Nutzer 5 das auf der ersten Anzeigevorrichtung dargestellte Gesicht des zweiten Nutzers in gleicher Weise betrachtet.

Wenn hingegen nicht ermittelt werden kann, welcher Bereich der Darstellung des Gesichts von dem ersten Nutzer 5 betrachtet wird, wird bei der Verarbeitung der Videobilddaten die Ziel-Blickrichtung des in den veränderten Videobilddaten dargestellten ersten Nutzers so bestimmt, dass der erste Nutzer 5 ein auf der ersten Anzeigevorrichtung 4 dargestelltes Auge des zweiten Nutzers 9 betrachtet.

Wenn in diesem Fall von der ersten Anzeigevorrichtung 4 Videobilddaten wiedergegeben werden, die mehrere Personen, z. B. mehrere zweite Nutzer, umfassen, wird gemäß der Erfindung unterschieden, welchen dieser dargestellten Nutzer der erste Nutzer 5 betrachtet. Die verschiedenen zweiten Nutzer können gemeinsam von der zweiten Bildaufnahmevorrichtung 7 oder von separaten zweiten Bildaufnahmevorrichtungen aufgenommen werden. Es wird dann ermittelt, ob das Objekt die Darstellung des Gesichts eines bestimmten der mehreren zweiten Nutzer ist. Bei der Verarbeitung der Videobilddaten erscheint die Ziel-Blickrichtung des in den veränderten Videobilddaten dargestellten ersten Nutzers dann so, als wäre die erste Bildaufnahmevorrichtung 3 auf der Geraden angeordnet, die durch eines der Augen des ersten Nutzers 5, d. h. durch die Position 15, geht und ferner durch eines der dargestellten Augen des bestimmten der mehreren zweiten Nutzer geht. Die Veränderung der Videobilddaten sorgt dafür, dass der dargestellte Gesprächspartner, auf den die Blickrichtung 16 des ersten Nutzers 5 gerichtet ist, sieht, dass er angeschaut wird, wohingegen die anderen zweiten Nutzer sehen, dass sie nicht angeschaut werden.

Im Folgenden wird ein drittes Ausführungsbeispiel des erfindungsgemäßen Verfahrens beschrieben:
Zunächst werden die Schritte S1 bis S4 wie bei dem ersten Ausführungsbeispiel durchgeführt.

Im Schritt S5 wird dann die Blickrichtung des ersten Nutzers 5 erfasst. Allerdings wird bei dem dritten Ausführungsbeispiel hierfür die Pose des Kopfes des ersten Nutzers 5 anhand der aufgenommenen Videobilddaten ermittelt. Unter der Pose des Kopfes wird die räumliche Lage des Kopfes verstanden, d. h. die Kombination aus der Position und der Orientierung des Kopfes. Allein aus der Pose wird in diesem Fall die Blickrichtung des ersten Nutzers ermittelt.

Anschließend werden die aufgenommenen Videobilddaten wie folgt verarbeitet:
In einem Schritt a) wird ein verformbares dreidimensionales Modell des Kopfes des ersten Nutzers 5 erstellt. Hierfür wird ein verformbares dreidimensionales Netz verwendet.

Beispielsweise kann das so genannte Basel Face Model verwendet werden. Es umfasst parametrisierte Knotenpunkte, so dass das dreidimensionale Modell des Kopfes von einem Parametersatz mit einer Vielzahl von Parametern definiert ist. Die Knotenpunkte werden von einem Satz Dreiecke gebildet, an deren Ecken sich die Knotenpunkte befinden.

Bei dem vorliegenden Ausführungsbeispiel gibt es ca. 58.000 Knotenpunkte. Jeder Knotenpunkt ist ein dreidimensionaler Vektor, der wie folgt definiert ist: ${v}_{k} = {v}_{Start , k} + {S}_{k} s + {E}_{k} e$

Dabei ist vₖ der dreidimensionale Vektor des k-ten Knotenpunktes, v_{Start, k} ist der Startvektor des k-ten Knotenpunktes, Sₖ ist eine Kopfbeschreibungsmatrix und Eₖ ist eine Gesichtsbeschreibugnsmatrix. Ferner ist s ein Kopfbeschreibungsvektor und e ein Gesichtsausdrucksbeschreibungsvektor. Die Matrix Sₖ hat ca. 200 Spalten und drei Zeilen, d. h. jeweils eine Zeile für jede Koordinatenachse. Die Matrix Eₖ hat ca. 100 Spalten und drei Zeilen für die drei Koordinatenachsen. Der Kopfbeschreibungsvektor s hat entsprechend ca. 200 Koeffizienten und der Gesichtsausdrucksbeschreibungsvektor e hat entsprechend ca. 100 Koeffizienten. Auf diese Weise wird die Parametrisierung des dreidimensionalen Modells beschrieben. Der Kopfbeschreibungsvektor s und der Gesichtsausdrucksbeschreibungsvektor e ist für jeden Knoten k gleich. Der Kopfbeschreibungsvektor s ist für jeden Nutzer gleich. Verschiedene Nutzer haben jedoch verschiedene Kopfbeschreibungsvektoren s. Der Gesichtsausdrucksbeschreibungsvektor e ist nur für jeden Nutzer und für jedes Bild, d. h. jeden Videoframe, identisch. Verändert sich der Gesichtsausdruck eines Nutzers von einem Videoframe zu einem nächsten Videoframe, verändert sich auch der Gesichtsausdrucksbeschreibungsvektor e.

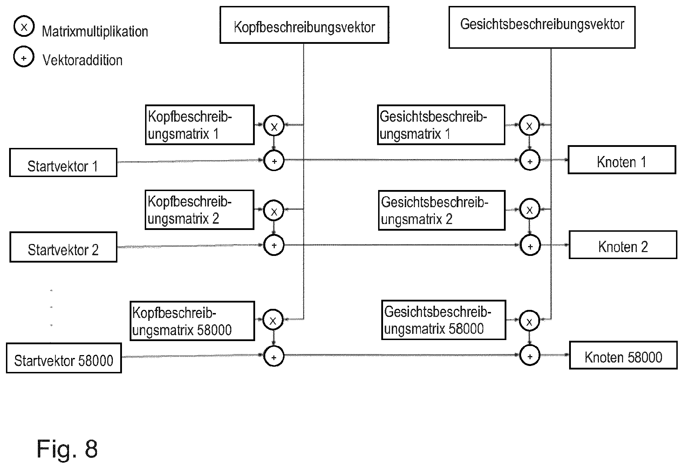

Der Startvektor v_{Start, k} und die Matrizen Sₖ und Eₖ unterscheiden sich für jeden Knoten k. Die Korrektur der Knotenpunkte ausgehend von dem Startvektor wird durch eine Matrixmultiplikation mit ca. 58.000 verschiedenen vorbestimmten Matrizen berechnet. Die Berechnung der dreidimensionalen Vektoren für die Knoten ist in Figur 8 veranschaulicht. Dabei werden der Kopfbeschreibungsvektor s, der Gesichtsausdrucksbeschreibungsvektor e sowie die Vektoren für die Knoten k bestimmt, die Startvektoren und die Matrizen sind konstante Daten, die vorab festgelegt werden.

Die Parameter für das in Schritt a) erzeugte dreidimensionale Modell umfassen somit Kopfbeschreibungs-Parameter und Gesichtsausdrucksbeschreibungs-Parameter, wobei die Kopfbeschreibungs-Parameter für verschiedene Nutzer individuell bestimmt werden und die Gesichtsausdrucks-Parameter für die aufgenommenen Videobilddaten bestimmt werden.

Durch diese Darstellung in einem dreidimensionalen Modell können jedes menschliche Gesicht und jeder Gesichtsausdruck eines Menschen durch die Festlegung von 300 Parametern beschrieben werden.

Außerdem gibt es sechs zusätzliche Parameter für die allgemeine Orientierung des Kopfes in der Szene, d. h. die Pose des Kopfes. Drei dieser Parameter legen die Drehwinkel fest und drei weitere Parameter die Translation eines Startvektors. Jede starre Transformation kann durch ein solches 6-Tupel dargestellt werden.

Die Position eines Knotenpunktes vₖ in der Szene wird dann wie folgt beschrieben: $v {′}_{k} = {Rv}_{k} + t$

Die Konstanten R und t beschreiben dabei Drehungen und Verschiebungen des Vektors vₖ, aus denen sich der Vektor v'ₖ ergibt.

Es wird darauf hingewiesen, dass die Netzstruktur, welche die Knotenpunkte des Dreiecks des Netzes bilden, fest ist, d. h. alle Parametrisierungen des Modells die gleiche Triangulation haben.

Erfindungsgemäß können nun verschiedene Ansätze eingesetzt werden, um die ca. 300 Parameter festzulegen, von denen ca. 100 Parameter für jeden Videoframe festgelegt werden müssen, wohingegen ca. 200 Parameter als konstant angesetzt werden können. Die Parameter sollen dabei so gewählt werden, dass der Kopf des Nutzers wirklichkeitsgetreu und mit dem richtigen Gesichtsausdruck und mit der richtigen Pose in jedem Videoframe dargestellt wird.

Bei dem dritten Ausführungsbeispiel des erfindungsgemäßen Verfahrens werden die Koeffizienten der Kopfbeschreibungs-Parameter durch ein Maschinenlernverfahren gewonnen. Dabei wird eine Korrektur von Koeffizienten der Kopfbeschreibungs-Parameter durch eine Projektion der in den aufgenommenen Videobilddaten enthaltenen Darstellung des Kopfes des ersten Nutzers 5 in das dreidimensionale Modell des Kopfes des ersten Nutzers 5 berechnet wird.

Im Einzelnen werden zunächst R und t zufällig festgelegt. Ferner werden auch die Koeffizienten der Kopfbeschreibungs-Vektoren und der Gesichtsausdrucksbeschreibungs-Vektoren s₁, e₁, s₂, e₂ zufällig festgelegt. Dabei sind die Komponenten von s₁, e₁ und s₂, e₂ gleich, außer für einen einzigen Koeffizienten, für welchen der Prädiktor trainiert wird.

Es werden dann Bilder unter Verwendung des dreidimensionalen Modells mit den Parametern R, t, s₂, e₂ erzeugt.

Anschließend wird eine Bildfarbe für jeden Knotenpunkt k unter Verwendung von R, t, s₁, e₂ gewonnen, wobei hierbei bewusst falsche Koeffizienten verwendet werden.

Mittels eines Regressionsbaums werden dann die Koeffizienten s₂, e₂, die vorhergesagt werden sollen, bestimmt, und zwar auf Basis der Bildfarben der Knotenpunkte, die zuvor festgelegt wurden.

Diese Regressionsbäume werden so trainiert, dass sie die Vorhersage für eine einzelne Dimension iterativ verbessern können, wobei die gesamte vorherige Vorhersage verwendet wird. Dieser Ansatz unterscheidet sich wesentlich von Ansätzen des Standes der Technik, welche nur Koordinaten im zweidimensionalen Raum erlernen. Anders ausgedrückt wird ein Maschinenlernverfahren erfindungsgemäß so trainiert, um die Korrektur von Koeffizienten eines Kopfbeschreibungs-Vektors vorherzusagen, und zwar auf Basis der Projektion in ein dreidimensionales Modell.

Mit anderen Worten werden die Kopfbeschreibungs-Parameter durch ein Maschinenlernverfahren gewonnen, das wie folgt trainiert wurde:
Es werden Testkoeffizienten für einen Startvektor erzeugt. Ferner werden Testkoeffizienten für einen ersten und zweiten Kopfbeschreibungs-Parameter und einen ersten und zweiten Gesichtsausdrucksbeschreibungs-Parameter erzeugt. Die Testkoeffizienten für den ersten und zweiten Kopfbeschreibungs-Parameter und den ersten und zweiten Gesichtsausdrucksbeschreibungs-Parameter sind dabei bis auf jeweils einen zu bestimmenden Koeffizienten identisch. Es wird dann eine Testdarstellung eines Kopfes mit dem Testkoeffizienten für den Startvektor und dem zweiten Kopfbeschreibungs-Parameter und dem zweiten Gesichtsausdrucksbeschreibungs-Parameter erzeugt. Anschließend wird eine Bildfarbe für jeden Knotenpunkt mit den Testkoeffizienten für den Startvektor und dem ersten Kopfbeschreibungs-Parameter und dem ersten Gesichtsausdrucksbeschreibungs-Parameter abgerufen. Nun werden die abgerufenen Bildfarben in das Maschinenlernverfahren eingegeben und der Parameter des Maschinenlernverfahrens wird so optimiert, dass die Differenz des Ergebnisses des Maschinenlernverfahrens, d. h. die mit dem Maschinenlernverfahren ermittelten Koeffizienten, zu dem zu bestimmenden Koeffizienten der zweiten Kopfbeschreibungs- und Gesichtsausdruckbeschreibungs-Parameter minimiert wird.

Die aufgenommenen Videobilddaten werden bei dem erfindungsgemäßen Verfahren des dritten Ausführungsbeispiels in einem Schritt b) in das erstellte dreidimensionale Modell des ersten Nutzers 5 projiziert, so dass eine erste dreidimensionale Repräsentation des von der ersten Bildaufnahmevorrichtung 3 aufgenommenen Kopfes des ersten Nutzers 5 erstellt wird. Diese erste dreidimensionale Repräsentation weist jedoch zumindest einen Lückenbereich auf, der sich durch verdeckte Bereiche des Kopfes des ersten Nutzers 5 ergibt, die in den aufgenommenen Videobilddaten nicht sichtbar sind. Beispielsweise kann bei einer etwas schrägen Aufnahme ein Seitenbereich der Nase verdeckt sein und somit einen Lückenbereich bilden. Ferner können Haare Bereiche der Stirn verdecken und somit einen weiteren Lückenbereich bilden.

Bei dem erfindungsgemäßen Verfahren des dritten Ausführungsbeispiels bleiben die Lückenbereiche bei dem Training des Maschinenlernverfahrens, wie es vorstehend beschrieben wurde, unberücksichtigt. Bei der Korrektur der Kopfbeschreibungs-Parameter wird die Projektion der in den aufgenommenen Videobilddaten enthaltenen Darstellung des Kopfes des ersten Nutzers 5 in das dreidimensionale Modell des Kopfes des ersten Nutzers 5 einem geometrischen Modellierungsprozess zur Herstellung eines zweidimensionalen Bildes unterzogen, welches die Projektion in das dreidimensionale Modell repräsentiert. Dieser geometrische Modellierungsprozess wird auch als UV-Mapping bezeichnet. Es wird bei dem dritten Ausführungsbeispiel des erfindungsgemäßen Verfahrens somit ein Maschinenlernverfahren auf ein zweidimensionales Bild angewandt, welches durch UV-Mapping gewonnen wurde. Mit anderen Worten bewertet das Maschinenlernverfahren, ob die Projektion in das dreidimensionale Modell sinnvoll ist. Dabei wird insbesondere kein Generative Adversarial Network (GAN) eingesetzt, so dass sich dieser Ansatz von herkömmlichen Verfahren, die ein GAN einsetzen, unterscheidet.

Optionale können bei dem dritten Ausführungsbeispiel des erfindungsgemäßen Verfahrens auch Schlüsselpunkt (Landmark) -Detektoren verwendet werden. Solche Schlüsselpunkte identifizieren das Gesicht des Nutzers mittels Maschinenlernverfahren, insbesondere neuronalen Netzwerken oder Regression Forests. Das Maschinenlernverfahren wird hierfür anhand von Trainingsbeispielen trainiert.

Optional kann ferner der optische Fluss von einzelnen Punkten des Bildes in aufeinanderfolgenden Videoframes betrachtet werden. Dabei können außerdem Gesichtsausdrücke berücksichtigt werden. Als weiterer alternativer Ansatz kann schließlich noch differentielles Rendering verwendet werden.

Als Nächstes wird bei dem Verfahren des dritten Ausführungsbeispiels in einem Schritt c) eine Textur zum Auffüllen des Lückenbereichs berechnet.

Ist die Textur berechnet worden, wird in einem Schritt d) eine zweite dreidimensionale Repräsentation des Kopfes des ersten Nutzers 5 erzeugt, bei welcher der Lückenbereich oder die Lückenbereiche mit der berechneten Textur ausgefüllt ist bzw. sind.

Dabei wird berücksichtigt, dass die zweite Repräsentation des Kopfes des ersten Nutzers 5 keine dreidimensionale Darstellung von Körperteilen umfasst, deren Größe geringer als ein Grenzwert ist, der beispielsweise in einem Bereich von 1 mm bis 5 mm liegt. Bestimmte Körperteile werden daher nicht in dem dreidimensionalen Modell dargestellt, sondern als Textur in der zweiten Repräsentation dargestellt. Bei dem Verfahren des dritten Ausführungsbeispiels werden die Pupillen, die Augenlider und die Augenbrauen des Kopfes des ersten Nutzers 5 nur als Textur dargestellt.

Im Folgenden wird beschrieben, wie die Textur zum Auffüllen des Lückenbereichs berechnet wird:
Der Lückenbereich wird eingefärbt. Die Farben des Lückenbereichs werden mittels eines Maschinenlernverfahrens anhand von Farben der aufgenommenen Videobilddaten vorhergesagt.

Das Einfärben wird dabei mit zweidimensionalen Bildern durchgeführt, um verlorengegangene Bildteile wiederherzustellen oder unerwünschte Elemente zu entfernen. Durch das Einfärben werden Teile des Gesichts rekonstruiert, die aus der Sicht der ersten Bildaufnahmevorrichtung 3 verdeckt sind. Im Gegensatz zu herkömmlichen Ansätzen wird die Rekonstruktion auf die Textur des dreidimensionalen Modells selbst angewendet.

Beim Berechnen der Textur zum Auffüllen des Lückenbereichs wird ein geometrischer Modellierungsprozess zur Erstellung eines zweidimensionalen Bildes, welches die Projektion in das dreidimensionale Modell repräsentiert, durchgeführt. Bildlich gesprochen wird die Form des dreidimensionalen Modells ausgerollt dargestellt. Dies wird auch als UV-Mapping bezeichnet.

Im Falle des vorliegenden verformbaren dreidimensionalen Modells kann dabei nicht nur die Kopfhaltung normiert werden, sondern auch unterschiedliche Identitäten und Gesichtsausdrücke. Das eingefärbte Netzwerk sagt dann die Farben der verdeckten Bereiche des zweidimensionalen Bildes, welches aus dem UV Mapping gewonnen wurde, anhand bekannter Farben voraus. Das erstellte zweidimensionale Bild wird dann zum Training eines Generative Adversarial Network (GAN) verwendet.

Die Verlustfunktion dieses Generative Adversarial Network (GAN) ist üblicherweise nur die Differenz des erzeugten Bildes zum Trainingsbeispiel: $L = {\sum }_{x , y} {\left(f\left(x, y\right)-g\left(x, y\right)\right)}^{2} ,$ wobei sich die Summe über das gesamte zweidimensionale Bild erstreckt. Dabei bezeichnet g das erzeugte Bild, während f das erwartete Bild bezeichnet.

Bei dem dritten Ausführungsbeispiel des erfindungsgemäßen Verfahrens wird die Textur zum Auffüllen des Lückenbereichs durch ein Maschinenlernverfahren berechnet, das mit folgenden Schritten trainiert wurde:
Ein Einzelbild f wird aus einem Trainingsvideo als Zielbild bereitgestellt. Die Parameter R, t, e, s werden wie vorstehend beschrieben geschätzt. Dann wird das Einzelbild f auf das durch R, t, e, s ausgerichtete und parametrisierte dreidimensionale Modell projiziert. Das durch UV Mapping gewonnene zweidimensionale Bild wird als h bezeichnet. Dabei gibt ein Einzelbit-Vektor durch α an, ob der entsprechende Punkt wiederhergestellt werden konnte. Der Einzelbit-Vektor gibt an, ob dieser Punkt verdeckt ist oder nicht. Hierdurch kann sichergestellt werden, dass das Training nicht für verdeckte Bereiche erfolgt.

Es wird dann eine zusätzliche Verdeckungsmaske erstellt, indem Bereiche aus h entfernt werden. Auf diese Weise wird ein modifiziertes zweidimensionales Bild erzeugt, welches mit h' bezeichnet wird. Durch diese Maskierung wird der Lückenbereich vergrößert. Die in α bezeichneten Bereiche werden dabei auf Null gesetzt und mit α' bezeichnet.

Das modifizierte zweidimensionale Bild h' wird in das Generative Adversarial Network (GAN) eingegeben, wobei die folgende Rekonstruktions-Verlustfunktion verwendet wird: $L = {\sum }_{x , y} α \left(x, y\right) {\left(h\left(x, y\right)-h′\left(x, y\right)\right)}^{2} ,$

Die Verlustfunktion beinhaltet dabei auch einen gegensätzlichen Teil, der aus einem zweiten Netzwerk stammt, das echte Bilder von erzeugten Bildern unterscheiden soll. Im vorliegenden Fall sind die echten Bilder durch UV Mapping gewonnene zweidimensionale Bilder, z. B. die Bilder, die vorstehend mit h bezeichnet sind.

Durch dieses Training wird das zweidimensionale Bild h mittels des modifizierten zweidimensionale Bildes h' vorausgesagt, wobei alles ignoriert wird, was bei dem zweidimensionalen Bild h verdeckt war.

Schließlich werden in einem Schritt e) die aufgenommenen Videobilddaten derart verändert, dass der Kopf des ersten Nutzers 5 mittels der zweiten dreidimensionale Repräsentation so dargestellt wird, dass die Ziel-Blickrichtung des Kopfes des ersten Nutzers 5 in den veränderten Videobilddaten dargestellten ersten Nutzers 5 so erscheint, als wäre die erste Bildaufnahmevorrichtung 3 auf einer Geraden 18 angeordnet, die durch einen ersten Umgebungsbereich der Augen des ersten Nutzers 5 und durch einen zweiten Umgebungsbereich der auf der ersten Anzeigevorrichtung 4 dargestellten Augen des zweiten Nutzers 9 geht.

Anschließend wird der Schritt S11 entsprechend dem ersten Ausführungsbeispiel durchgeführt.

### Bezugszeichenliste

- 1: Videokonferenzsystem
- 2: erste Videokonferenzeinrichtung
- 3: erste Bildaufnahmevorrichtung
- 4: erste Anzeigevorrichtung
- 5: erster Nutzer
- 6: zweite Videokonferenzeinrichtung
- 7: zweite Bildaufnahmevorrichtung
- 8: zweite Anzeigevorrichtung
- 9: zweiter Nutzer
- 10: Datenverbindung
- 11: Datenverbindung
- 12: Datenverbindung
- 13: Datenverbindung
- 14: Verarbeitungseinheit
- 15: Position eines Auges des ersten Nutzers
- 16: Blickrichtung
- 17: Position der Darstellung eines Auges des zweiten Nutzers
- 18: Gerade
- 19: Aufnahmerichtung
- 20: aufgenommener, die Augen des ersten Nutzers umfassender Bereich
- 21: Blickrichtungsbereich
- 22: Restbereich
- 23: erster Teilbereich
- 24: zweiter Teilbereich
- 25: Augenzone
- 26: Übergangszone
- 27: Randzone

## Patentansprüche

1. Videokonferenzverfahren, bei dem
mit einer ersten Videokonferenzeinrichtung (2) erste Videobilddaten mittels einer ersten Anzeigevorrichtung (4) wiedergegeben werden und von einer ersten Bildaufnahmevorrichtung (3) zumindest ein die Augen umfassender Bereich des Kopfes eines ersten Nutzers (5) in einer Position aufgenommen wird, bei welcher der erste Nutzer (5) die von der ersten Anzeigevorrichtung (4) wiedergegebenen Videobilddaten betrachtet, wobei die von der ersten Anzeigevorrichtung (4) wiedergegebenen Videobilddaten zumindest eine Darstellung der Augen eines zweiten Nutzers (9) umfassen, die von einer zweiten Bildaufnahmevorrichtung (7) einer zweiten Videokonferenzeinrichtung (6) aufgenommen werden, die entfernt von der ersten Videokonferenzeinrichtung (2) angeordnet ist;
von einer Verarbeitungseinheit (14) die von der ersten Bildaufnahmevorrichtung (3) aufgenommenen Videobilddaten zumindest des die Augen umfassenden Bereichs des Kopfes des ersten Nutzers (5) empfangen und verändert werden und die veränderten Videobilddaten an eine zweite Anzeigevorrichtung (8) der zweiten Videokonferenzeinrichtung (6) übertragen und von dieser wiedergegeben werden,
wobei bei der Verarbeitung der Videobilddaten die Blickrichtung (16) des ersten Nutzers (5) erfasst wird und in den Videobilddaten zumindest die Wiedergabe des die Augen umfassenden Bereichs des Kopfes des ersten Nutzers (5) so verändert wird, dass eine Ziel-Blickrichtung des in den veränderten Videobilddaten dargestellten ersten Nutzers (5) so erscheint, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht,
**dadurch gekennzeichnet, dass**
die von der ersten Anzeigevorrichtung (4) wiedergegebenen Videobilddaten zumindest eine Darstellung der Augen mehrerer zweiter Nutzer (9) umfassen, die gemeinsam von der zweiten Bildaufnahmevorrichtung (7) aufgenommen werden,
mittels der erfassten Blickrichtung (16) des ersten Nutzers (5) bestimmt wird, ob der erste Nutzer (5) einen Punkt der ersten Anzeigevorrichtung (4) betrachtet, und, wenn bestimmt wurde, dass ein Punkt der ersten Anzeigevorrichtung (4) betrachtet wird, ermittelt wird, welches Objekt aktuell bei diesem Punkt von der ersten Anzeigevorrichtung (4) dargestellt wird,
ermittelt wird, ob das Objekt die Darstellung des Gesichts eines bestimmten der mehreren zweiten Nutzer (9) ist, und
wenn ermittelt worden ist, dass das Objekt die Darstellung des Gesichts des bestimmten der mehreren zweiten Nutzer (9) ist, bei der Verarbeitung der Videobilddaten die Ziel-Blickrichtung des in den veränderten Videobilddaten dargestellten ersten Nutzers (5) so erscheint, dass der erste Nutzer (5) das auf der ersten Anzeigevorrichtung (4) dargestellte Gesicht des bestimmten der mehreren zweiten Nutzer (9) in gleicher Weise betrachtet, und
wenn ermittelt worden ist, dass das Objekt die Darstellung des Gesichts des bestimmten der mehreren zweiten Nutzer (9) ist, jedoch nicht ermittelt wurde, welcher Bereich der Darstellung des Gesichts betrachtet wird, bei der Verarbeitung der Videobilddaten die Ziel-Blickrichtung des in den veränderten Videobilddaten dargestellten ersten Nutzers (5) so erscheint, als wäre die erste Bildaufnahmevorrichtung (3) auf der Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des bestimmten der mehreren zweiten Nutzer (9) geht, so dass die Veränderung der Videobilddaten dafür sorgt, dass der dargestellte bestimmte der mehreren zweiten Nutzer (9), auf den die Blickrichtung (16) des ersten Nutzers (5) gerichtet ist, sieht, dass er angeschaut wird, wohingegen die anderen zweiten Nutzer (9) sehen, dass sie nicht angeschaut werden.

2. Videokonferenzverfahren nach Anspruch 1,
**dadurch gekennzeichnet, dass**
bei der Verarbeitung der Videobilddaten die veränderten Videobilddaten durch ein Generative Adversarial Network (GAN) mit einem Generator-Netzwerk und einem Diskriminator-Netzwerk erzeugt werden,
wobei das Generator-Netzwerk geänderte Videobilddaten erzeugt und das Diskriminator-Netzwerk eine Ähnlichkeit zwischen der Darstellung des Kopfes des ersten Nutzers (5) in den geränderten Videobilddaten und den aufgenommenen Videobilddaten bewertet sowie eine Übereinstimmung zwischen der Blickrichtung (16) des ersten Nutzers (5) in den geänderten Videobilddaten und der Ziel-Blickrichtung bewertet.

3. Videokonferenzverfahren nach Anspruch 1,
**dadurch gekennzeichnet, dass**
mittels der Verarbeitungseinheit (14) die von der ersten Bildaufnahmevorrichtung (3) aufgenommenen Videobilddaten, welche zumindest eine Darstellung des Kopfes des ersten Nutzers (5) umfassen, so analysiert werden, dass ein Gefühlsausdruck des ersten Nutzers (5) erfasst und einer oder mehreren Gefühlsausdruck-Klasse(n) zugeordnet wird,
das Diskriminator-Netzwerk ferner eine Übereinstimmung zwischen der/den Gefühlsausdruck-Klasse(n) der Darstellung des Kopfes des ersten Nutzers (5) in den veränderten Videobilddaten und der/den zugeordneten Gefühlsausdruck-Klasse(n) der Darstellung des Kopfes des ersten Nutzers (5) in den aufgenommenen Videobilddaten bewertet.

4. Videokonferenzverfahren nach einem der Ansprüche 1 bis 3,
**dadurch gekennzeichnet, dass**
bei der Verarbeitung der Videobilddaten ein Blickrichtungsbereich (21), der die Augen des ersten Nutzers (5) wiedergibt, aus einem Restbereich (22) extrahiert wird, wodurch Videobildteildaten erzeugt werden,
dieser Blickrichtungsbereich (21) in den Videobildteildaten danach so verändert wird, dass die von der Darstellung der Augen vorgegebene Blickrichtung (16) des ersten Nutzers (5) in den veränderten Videobildteildaten dieses Blickrichtungsbereichs (21) so erscheint, als wäre die erste Bildaufnahmevorrichtung (3) auf der Geraden (18) angeordnet, und dann die veränderten Videobildteildaten des Blickrichtungsbereichs (21) wieder in den Restbereich (22) der Videobilddaten eingesetzt werden, wodurch die veränderten Videobilddaten erzeugt werden.

5. Videokonferenzverfahren nach Anspruch 4,
**dadurch gekennzeichnet, dass**
der Blickrichtungsbereich (21) der Videobilddaten in einen ersten Teilbereich (23), der die Darstellung eines ersten Auges des ersten Nutzers (5) umfasst, und einen zweiten Teilbereich (24), der die Darstellung eines zweiten Auges des ersten Nutzers (5) umfasst, unterteilt ist.

6. Videokonferenzverfahren nach Anspruch 4,
**dadurch gekennzeichnet, dass**
der Blickrichtungsbereich (21) der Videobilddaten die Darstellung eines Kopfes des ersten Nutzers (5) umfasst und der Restbereich (22) einen Hintergrund der Darstellung des Kopfes umfasst.

7. Videokonferenzverfahren nach einem der Ansprüche 4 bis 6,
**dadurch gekennzeichnet, dass**
initial mehrere Bilder des ersten Nutzers (5) aufgenommen und gespeichert werden, bei denen der Blickrichtungsbereich (21) des ersten Nutzers (5) verschiedene Blickrichtungen (16) definiert, ohne dass die Pose des Kopfes des ersten Nutzers (5) verändert wird, und
die durch die Verarbeitung der Videobilddaten zu erzeugende veränderte Ziel-Blickrichtung des ersten Nutzers (5) mit den Blickrichtungen (16) der gespeicherten Bilder verglichen wird und ein Bild ausgewählt wird, bei welchem die Blickrichtung (16) der zu erzeugenden veränderten Ziel-Blickrichtung des ersten Nutzers (5) am nächsten kommt, und
bei der Verarbeitung der Videobilddaten das ausgewählte Bild verwendet wird, um die veränderten Videobildteildaten und/oder Videobilddaten zu erzeugen.

8. Videokonferenzverfahren nach einem der Ansprüche 4 bis 7,
**dadurch gekennzeichnet, dass**
der Blickrichtungsbereich (21) in eine Randzone (27), eine Augenzone (25), welche die Darstellung der Iris einschließlich der Pupille zumindest eines der Augen des ersten Nutzers (5) umfasst, und eine Übergangszone (26) zwischen der Randzone (27) und der Augenzone (25) umfasst,
bei der Verarbeitung der Videobilddaten der Blickrichtungsbereich (21) so verändert wird, dass die Augenzone (25) so verändert wird, dass die Blickrichtung (16) des ersten Nutzers (5) in den veränderten Videobilddaten der Augenzone (25) so erscheint, als wäre die erste Bildaufnahmevorrichtung (3) auf der Geraden (18) angeordnet, die Darstellung in der Randzone (27) nahtlos an die Darstellung benachbarter Bereiche des Restbereichs (22) anschließt und in der Übergangszone (26) die Videobilddaten so verändert werden, dass sich ein Übergang von der veränderten Darstellung in der Augenzone (25) zu der Darstellung in der Randzone (27) ergibt.

9. Videokonferenzverfahren nach Anspruch 1,
**dadurch gekennzeichnet, dass**
die von der ersten Bildaufnahmevorrichtung (3) aufgenommenen Videobilddaten zumindest eine Darstellung des Kopfes des ersten Nutzers (5) umfassen,
in den aufgenommenen Videobilddaten die Pose des Kopfes des ersten Nutzers (5) ermittelt wird und
die Blickrichtung (16) des ersten Nutzers (5) aus der ermittelten Pose des Kopfes des ersten Nutzers (5) erfasst wird.

10. Videokonferenzverfahren nach Anspruch 9,
**dadurch gekennzeichnet, dass**
bei der Verarbeitung der aufgenommenen Videobilddaten folgende Schritte ausgeführt werden:
a) Erstellen eines verformbaren dreidimensionalen Modells des Kopfes des ersten Nutzers (5),
b) Projizieren der aufgenommenen Videobilddaten in das erstellte dreidimensionale Modell des ersten Nutzers (5), sodass eine erste dreidimensionale Repräsentation des von der ersten Bildaufnahmevorrichtung (3) aufgenommenen Kopfes des ersten Nutzers (5) erstellt wird, wobei diese erste dreidimensionale Repräsentation zumindest einen Lückenbereich aufweist, der sich durch verdeckte Bereiche des Kopfes des ersten Nutzers ergibt, die in den aufgenommenen Videobilddaten nicht sichtbar sind,
c) Berechnen einer Textur zum Auffüllen des Lückenbereichs,
d) Erzeugen einer zweiten dreidimensionalen Repräsentation des Kopfes des ersten Nutzers (5), bei welcher der Lückenbereich mit der berechneten Textur ausgefüllt ist, und
e) Verändern der aufgenommenen Videobilddaten derart, dass der Kopf des ersten Nutzers mittels der zweiten dreidimensionale Repräsentation so dargestellt wird, dass die Ziel-Blickrichtung des Kopfes des ersten Nutzers (5) in den veränderten Videobilddaten dargestellten ersten Nutzers (5) so erscheint, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht.

11. Videokonferenzverfahren nach Anspruch 10,
**dadurch gekennzeichnet, dass**
das im Schritt a) erzeugte dreidimensionale Modell des Kopfes parametrisierte Knotenpunkte umfasst, sodass das dreidimensionale Modell des Kopfes von einem Parametersatz mit einer Vielzahl von Parametern definiert ist.

12. Videokonferenzverfahren nach einem der Ansprüche 10 oder 11,
**dadurch gekennzeichnet, dass,**
im Schritt c) beim Berechnen einer Textur zum Auffüllen des Lückenbereichs ein geometrischer Modellierungsprozess zur Erstellung eines zweidimensionalen Bildes durchgeführt wird, welches die im Schritt b) gewonnene Projektion in das dreidimensionale Modell repräsentiert, und das erstellte zweidimensionale Bild zum Training eines Generative Adversarial Network (GAN) verwendet wird.

13. Videokonferenzverfahren nach Anspruch 12,
**dadurch gekennzeichnet, dass,**
die Textur zum Auffüllen des Lückenbereichs im Schritt c) durch ein Maschinenlernverfahren berechnet wird, das mit folgenden Schritten trainiert wurde:
c1) Bereitstellen eines Videoframes aus Trainingsvideobilddaten,
c2) Schätzen von Parametern des dreidimensionalen Modells des Kopfes des ersten Nutzers (5),
c3) Projizieren des bereitgestellten Videoframes in das dreidimensionale Modell des ersten Nutzers (5) mit den geschätzten Parametern,
c4) Erstellen eines zweidimensionalen Bildes, welches die im Schritt c3) erstellte Projektion repräsentiert und welches den Lückenbereich enthält,
c5) Erstellen eines modifizierten zweidimensionalen Bildes durch Anwenden einer Maskierung auf das im Schritt c4) erstellte zweidimensionale Bild, wobei durch die Maskierung der Lückenbereich vergrößert wird,
c6) Eingeben des im Schritt c5) erstellten modifizierten zweidimensionalen Bildes in das Training des Generative Adversarial Network (GAN), wobei in der Verlustfunktion die Differenz des zweidimensionalen Bildes und des modifizierten zweidimensionalen Bildes betrachtet wird.

14. Videokonferenzsystem (1) mit
einer ersten Videokonferenzeinrichtung (2), die eine erste Anzeigevorrichtung (4) und eine erste Bildaufnahmevorrichtung (3) aufweist, wobei die erste Bildaufnahmevorrichtung (3) angeordnet ist, zumindest einen die Augen umfassenden Bereich des Kopfes (20) eines ersten Nutzers (5) in einer Position aufzunehmen, bei welcher der erste Nutzer (5) die von der ersten Anzeigevorrichtung (4) wiedergegebenen Videobilddaten betrachtet,
einer zweiten Videokonferenzeinrichtung (6), die entfernt von der ersten Videokonferenzeinrichtung (2) angeordnet ist, die datentechnisch mit der ersten Videokonferenzeinrichtung (2) gekoppelt ist und die eine zweite Anzeigevorrichtung (8) zur Wiedergabe von Videobilddaten aufweist, die von der ersten Bildaufnahmevorrichtung (3) aufgenommen werden,
eine Verarbeitungseinheit (14), welche mit der ersten Bildaufnahmevorrichtung (3) gekoppelt ist und welche ausgebildet ist, die von der ersten Bildaufnahmevorrichtung (3) aufgenommenen Videobilddaten zu empfangen und zu verarbeiten und die verarbeiteten Videobilddaten an die zweite Anzeigevorrichtung (8) der zweiten Videokonferenzeinrichtung (6) zu übertragen,
wobei die Verarbeitungseinheit (14) ausgebildet ist, bei der Verarbeitung der Videobilddaten die Blickrichtung (16) des dargestellten ersten Nutzers (5) zu erfassen, in den Videobilddaten die Wiedergabe zumindest des die Augen umfassenden Bereichs des Kopfes (20) des ersten Nutzers (5) so zu verändern, dass eine Ziel-Blickrichtung des ersten Nutzers (5) in den veränderten Videobilddaten so erscheint, als wäre die erste Bildaufnahmevorrichtung (3) auf einer Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des zweiten Nutzers (9) geht,
**dadurch gekennzeichnet, dass**
die erste Anzeigevorrichtung (4) ausgebildet ist, dass die von ihr wiedergegebenen Videobilddaten zumindest eine Darstellung der Augen mehrerer zweiter Nutzer (9) umfassen, die gemeinsam von der zweiten Bildaufnahmevorrichtung (7) aufgenommen werden, und
die Verarbeitungseinheit (14) ausgebildet ist:
mittels der erfassten Blickrichtung (16) des ersten Nutzers (5) zu bestimmen, ob der erste Nutzer (5) einen Punkt der ersten Anzeigevorrichtung (4) betrachtet, und, wenn bestimmt wurde, dass ein Punkt der ersten Anzeigevorrichtung (4) betrachtet wird, ermittelt wird, welches Objekt aktuell bei diesem Punkt von der ersten Anzeigevorrichtung (4) dargestellt wird,
zu ermitteln, ob das Objekt die Darstellung des Gesichts eines bestimmten der mehreren zweiten Nutzer (9) ist, und,
wenn ermittelt worden ist, dass das Objekt die Darstellung des Gesichts des bestimmten der mehreren zweiten Nutzer (9) ist, bei der Verarbeitung der Videobilddaten die Ziel-Blickrichtung des in den veränderten Videobilddaten dargestellten ersten Nutzers (5) so erscheint, dass der erste Nutzer (5) das auf der ersten Anzeigevorrichtung (4) dargestellte Gesicht des bestimmten der mehreren zweiten Nutzer (9) in gleicher Weise betrachtet, und
wenn ermittelt worden ist, dass das Objekt die Darstellung des Gesichts des bestimmten der mehreren zweiten Nutzer (9) ist, jedoch nicht ermittelt wurde, welcher Bereich der Darstellung des Gesichts betrachtet wird, in den verarbeiten Videobilddaten die Ziel-Blickrichtung des in den veränderten Videobilddaten dargestellten ersten Nutzers (5) so erscheinen zu lassen, als wäre die erste Bildaufnahmevorrichtung (3) auf der Geraden (18) angeordnet, die durch einen ersten Umgebungsbereich der Augen des ersten Nutzers (5) und durch einen zweiten Umgebungsbereich der auf der ersten Anzeigevorrichtung (4) dargestellten Augen des bestimmten der mehreren zweiten Nutzer (9) geht, so dass die Veränderung der Videobilddaten dafür sorgt, dass der dargestellte bestimmte der mehreren zweiten Nutzer (9), auf den die Blickrichtung (16) des ersten Nutzers (5) gerichtet ist, sieht, dass er angeschaut wird, wohingegen die anderen zweiten Nutzer (9) sehen, dass sie nicht angeschaut werden.

## Claims

1. Video conferencing method, in which
first video image data are reproduced by a first video conferencing device (2) by means of a first display device (4) and at least a region of the head of a first user (5) comprising the eyes is captured by a first image capture device (3) in a position in which the first user (5) is looking at the video image data reproduced by the first display device (4), the video image data reproduced by the first display device (4) comprising at least a depiction of the eyes of a second user (9) captured by a second image capture device (7) of a second video conferencing device (6) arranged remotely from the first video conferencing device (2);
a processing unit (14) receives and modifies the video image data of at least the region of the head of the first user (5) comprising the eyes, captured by the first image capture device (3), and the modified video image data are transmitted to and reproduced by a second display device (8) of the second video conferencing device (6),
the direction of gaze (16) of the first user (5) being detected during the processing of the video image data and, in the video image data, at least the reproduction of the region of the head of the first user (5) comprising the eyes then being modified so that a target direction of gaze of the first user (5) depicted in the modified video image data appears as if the first image capture device (3) were arranged on a straight line (18) passing through a first surrounding region of the eyes of the first user (5) and through a second surrounding region of the eyes of the second user (9) depicted on the first display device (4),
**characterised in that**
the video image data reproduced by the first display device (4) comprise at least one depiction of the eyes of a plurality of second users (9) jointly captured by the second image capture device (7),
it is determined by means of the detected direction of gaze (16) of the first user (5) whether the first user (5) is looking at a point of the first display device (4), and, if it has been determined that a point of the first display device (4) is being looked at, it is determined which object is currently being depicted at this point by the first display device (4),
it is determined whether the object is a depiction of the face of a particular one of the plurality of second users (9), and
if it has been determined that the object is the depiction of the face of the particular one of the plurality of second users (9), when the video image data are processed, the target direction of gaze of the first user (5) depicted in the modified video image data appears to be such that the first user (5) is looking at the face of the particular one of the plurality of second users (9) depicted on the first display device (4) in the same manner, and
if it has been determined that the object is the depiction of the face of the particular one of the plurality of second users (9), but it has not been determined which region of the depiction of the face is being looked at, when the video image data are processed, the target direction of gaze of the first user (5) depicted in the modified video image data appears as if the first image capture device (3) were arranged on a straight line (18) passing through a first surrounding region of the eyes of the first user (5) and through a second surrounding region of the eyes of the particular one of the plurality of second users (9) depicted on the first display device (4), such that the modification of the video image data ensuring that the depicted particular one of the plurality of second users (9), to whom the direction of gaze (16) of the first user (5) is directed, sees that he is being looked at, whereas the other second users (9) see that they are not being looked at.

2. Video conferencing method according to claim 1,
**characterised in that**
during the processing of the video image data, the modified video image data are generated by a Generative Adversarial Network (GAN) with a generator network and a discriminator network,
the generator network generating modified video image data and the discriminator network evaluating a similarity between the depiction of the head of the first user (5) in the modified video image data and the captured video image data and also evaluating a match between the direction of gaze (16) of the first user (5) in the modified video image data and the target direction of gaze.

3. Video conferencing method according to claim 1,
**characterised in that**
the video image data captured by the first image capture device (3) and comprising at least a depiction of the head of the first user (5) are analysed by means of the processing unit (14) in such a way that an emotion expression of the first user (5) is detected and assigned to one or more emotion expression class(es),
the discriminator network further evaluates a match between the emotion expression class(es) of the depiction of the head of the first user (5) in the modified video image data and the associated emotion expression class(es) of the depiction of the head of the first user (5) in the captured video image data.

4. Video conferencing method according to one of claims 1 to 3,
**characterised in that**
during the processing of the video image data, a direction of gaze region (21) representing the eyes of the first user (5) is extracted from a remaining region (22), thereby generating video image partial data,
this direction of gaze region (21) is then modified in the video image partial data so that the direction of gaze (16) of the first user (5) given by the depiction of the eyes appears in the modified video image partial data of this direction of gaze region (21) as if the first image capture device (3) were arranged on the straight line (18), and then the modified video image partial data of the direction of gaze region (21) are reinserted into the remaining region (22) of the video image data, thereby generating the modified video image data.

5. Video conferencing method according to claim 4,
**characterised in that**
the direction of gaze region (21) of the video image data is divided into a first subregion (23) comprising the depiction of a first eye of the first user (5) and a second subregion (24) comprising the depiction of a second eye of the first user (5).

6. Video conferencing method according to claim 4,
**characterised in that**
the direction of gaze region (21) of the video image data comprises a depiction of a head of the first user (5) and the remaining region (22) comprises a background of the depiction of the head.

7. Video conferencing method according to one of claims 4 to 6,
**characterised in that**
a plurality of images of the first user (5) are initially captured and stored, in which the direction of gaze region (21) of the first user (5) defines different directions of gaze (16) without changing the pose of the head of the first user (5), and
the changed target direction of gaze of the first user (5) to be generated by processing the video image data is compared with the directions of gaze (16) of the stored images and an image is selected in which the direction of gaze (16) comes closest to the changed target direction of gaze of the first user (5) to be generated, and
when processing the video image data, the selected image is used to generate the modified video image partial data and/or video image data.

8. Video conferencing method according to one of claims 4 to 7,
**characterised in that**
the direction of gaze region (21) comprises a peripheral zone (27), an eye zone (25) comprising the depiction of the iris including the pupil of at least one of the eyes of the first user (5), and a transition zone (26) between the peripheral zone (27) and the eye zone (25),
during processing of the video image data, the direction of gaze region (21) is then changed such that the eye zone (25) is changed such that the direction of gaze (16) of the first user (5) in the modified video image data of the eye zone (25) appears as if the first image capture device (3) were arranged on the straight line (18), the depiction in the peripheral zone (27) seamlessly adjoins the depiction of adjacent regions of the remaining region (22), and in the transition zone (26) the video image data are modified such that there is a transition from the modified depiction in the eye zone (25) to the depiction in the peripheral zone (27).

9. Video conferencing method according to claim 1,
**characterised in that**
the video image data captured by the first image capture device (3) comprise at least a depiction of the head of the first user (5),
the pose of the head of the first user (5) is determined in the captured video image data, and
the direction of gaze (16) of the first user (5) is detected from the determined pose of the head of the first user (5).

10. Video conferencing method according to claim 9,
**characterised in that**
the following steps are carried out during the processing of the captured video image data:
a) creating a deformable three-dimensional model of the head of the first user (5),
b) projecting the captured video image data into the created three-dimensional model of the first user (5) so that a first three-dimensional representation of the head of the first user (5) captured by the first image capture device (3) is created, said first three-dimensional representation having at least one gap region resulting from occluded regions of the head of the first user that are not visible in the captured video image data,
c) calculating a texture to fill the gap region,
d) generating a second three-dimensional representation of the head of the first user (5), in which the gap region is filled with the calculated texture, and
e) modifying the captured video image data in such a way that the head of the first user is depicted by the second three-dimensional representation such that the target direction of gaze of the head of the first user (5) in the modified video image data of the first user (5) appears as if the first image capture device (3) were arranged on a straight line (18) passing through a first surrounding region of the eyes of the first user (5) and through a second surrounding region of the eyes of the second user (9) depicted on the first display device (4).

11. Video conferencing method according to claim 10,
**characterised in that**
the three-dimensional model of the head generated in step a) comprises parameterised nodal points, so that the three-dimensional model of the head is defined by a parameter set comprising a plurality of parameters.

12. Video conferencing method according to one of claims 10 or 11,
**characterised in that**
in step c), when calculating a texture to fill the gap region, a geometric modelling process is performed to create a two-dimensional image representing the projection, obtained in step b), into the three-dimensional model, and the created two-dimensional image is used to train a Generative Adversarial Network (GAN).

13. Video conferencing method according to claim 12,
**characterised in that**
the texture for filling the gap region in step c) is calculated by a machine learning procedure trained with the following steps:
c1) providing a video frame from training video image data,
c2) estimating parameters of the three-dimensional model of the head of the first user (5),
c3) projecting the provided video frame into the three-dimensional model of the first user (5) with the estimated parameters,
c4) creating a two-dimensional image representing the projection created in step c3) and containing the gap region,
c5) creating a modified two-dimensional image by applying a masking to the two-dimensional image created in step c4), the gap region being enlarged by the masking,
c6) inputting the modified two-dimensional image created in step c5) into the Generative Adversarial Network (GAN) training, the difference of the two-dimensional image and of the modified two-dimensional image being considered in the loss function.

14. Video conferencing system (1) comprising
a first video conferencing device (2) having a first display device (4) and a first image capture device (3), the first image capture device (3) being arranged to capture at least a region of the head (20) of a first user (5), said region comprising the eyes, in a position in which the first user (5) is looking at the video image data depicted by the first display device (4),
a second video conferencing device (6) remotely located from the first video conferencing device (2), coupled to the first video conferencing device (2) for data exchange, and having a second display device (8) for reproducing video image data captured by the first image capture device (3),
a processing unit (14) which is coupled to the first image capture device (3) and which is configured to receive and process the video image data captured by the first image capture device (3) and to transmit the processed video image data to the second display device (8) of the second video conferencing device (6),
the processing unit (14) being configured to detect the direction of gaze (16) of the depicted first user (5) when processing the video image data and to modify in the video image data the reproduction at least of the region of the head (20) of the first user (5) comprising the eyes such that the target direction of gaze of the first user (5) appears in the modified video image data as if the first image capture device (3) were arranged on a straight line (18) passing through a first surrounding region of the eyes of the first user (5) and through a second surrounding region of the eyes of the second user (9) depicted on the first display device (4),
**characterised in that**
the first display device (4) is configured such that the video image data reproduced by the first display device (4) comprise at least one depiction of the eyes of a plurality of second users (9) jointly captured by the second image capture device (7), and
the processing unit (14) is configured:
to determine by means of the detected direction of gaze (16) of the first user (5), whether the first user (5) is looking at a point of the first display device (4), and, if it has been determined that a point of the first display device (4) is being looked at, it is determined which object is currently being depicted at this point by the first display device (4),
to determine, whether the object is a depiction of the face of a particular one of the plurality of second users (9), and
if it has been determined that the object is the depiction of the face of the particular one of the plurality of second users (9), when the video image data are processed, the target direction of gaze of the first user (5) depicted in the modified video image data appears to be such that the first user (5) is looking at the face of the particular one of the plurality of second users (9) depicted on the first display device (4) in the same manner, and
if it has been determined that the object is the depiction of the face of the particular one of the plurality of second users (9), but it has not been determined, which region of the depiction of the face is being looked at, in the processed video image data the target direction of gaze of the first user (5) depicted in the modified video image data appears as if the first image capture device (3) were arranged on a straight line (18) passing through a first surrounding region of the eyes of the first user (5) and through a second surrounding region of the eyes of the particular one of the plurality of second users (9) depicted on the first display device (4), the modification of the video image data ensuring that the depicted particular one of the plurality of second users (9), to whom the direction of gaze (16) of the first user (5) is directed, sees that he is being looked at, whereas the other second users (9) see that they are not being looked at.

## Revendications

1. Procédé de vidéoconférence, dans lequel
avec un premier dispositif de vidéoconférence (2), des premières données d'image vidéo sont affichées au moyen d'un premier dispositif d'affichage (4) et au moins une zone de la tête comportant les yeux d'un premier utilisateur (5) est acquise par un premier dispositif d'acquisition d'images (3) dans une position dans laquelle le premier utilisateur (5) regarde les données d'image vidéo affichées par le premier dispositif d'affichage (4), lesdites données d'image vidéo affichées par le premier dispositif d'affichage (4) comprenant au moins une représentation des yeux d'un deuxième utilisateur (9) qui sont acquis par un deuxième dispositif d'acquisition d'images (7) d'un deuxième dispositif de vidéoconférence (6) situé à distance du premier dispositif de vidéoconférence (2),
les données d'image vidéo acquises par le premier dispositif d'acquisition d'images (3) et montrant au moins la zone de la tête comportant les yeux du premier utilisateur (5) sont reçues et sont modifiées par une unité de traitement (14), et les données d'image vidéo modifiées sont transmises à un deuxième dispositif d'affichage (8) du deuxième dispositif de vidéoconférence (6), qui les affiche ;
étant entendu que, lors du traitement des données d'image vidéo, la direction du regard (16) du premier utilisateur (5) est détectée et, dans les données d'image vidéo, au moins l'affichage de la zone de la tête comportant les yeux du premier utilisateur (5) est modifiée de telle façon qu'une direction de regard cible du premier utilisateur (5) représenté dans les données d'image vidéo modifiées apparaisse comme si le premier dispositif d'acquisition d'image (3) était disposé sur une droite (18) qui passe par une première zone entourant les yeux du premier utilisateur (5) et par une deuxième zone entourant les yeux du deuxième utilisateur (9) représentés sur le premier dispositif d'affichage (4),
**caractérisé en ce que**
les données d'image vidéo affichées par le premier dispositif d'affichage (4) doivent comprendre au moins une représentation des yeux de plusieurs deuxièmes utilisateurs (9) qui sont acquis conjointement par le deuxième dispositif d'acquisition d'images (7),
au moyen de la direction du regard (16) détectée du premier utilisateur (5), il est déterminé si le premier utilisateur (5) regarde un point du premier dispositif d'affichage (4) et, s'il a été déterminé qu'il regarde un point du premier dispositif d'affichage (4), il est déterminé quel objet est actuellement affiché en ce point par le premier dispositif d'affichage (4),
il est déterminé si l'objet est une représentation du visage d'un certain utilisateur parmi lesdits plusieurs deuxièmes utilisateurs (9), et
s'il a été déterminé que l'objet est une représentation du visage dudit certain utilisateur parmi les plusieurs deuxièmes utilisateurs (9), la direction du regard cible du premier utilisateur (5) représenté dans les données d'image vidéo modifiées apparaît, lors du traitement des données d'image vidéo, de telle façon que le premier utilisateur (5) regarde de la même manière le visage dudit certain utilisateur parmi les plusieurs deuxièmes utilisateurs (9) affiché sur le premier dispositif d'affichage (4), et
s'il a été déterminé que l'objet est une représentation du visage dudit certain utilisateur parmi les plusieurs deuxièmes utilisateurs (9), mais qu'il n'a pas été déterminé quelle zone de la représentation du visage est regardée, la direction du regard cible du premier utilisateur (5) représenté dans les données d'image vidéo modifiées apparaît, lors du traitement des données d'image vidéo, comme si le premier dispositif d'acquisition d'image (3) était disposé sur ladite droite (18) qui passe par une première zone entourant les yeux du premier utilisateur (5) et par une deuxième zone entourant les yeux dudit certain utilisateur parmi les plusieurs deuxièmes utilisateurs (9) qui sont représentés sur le premier dispositif d'affichage (4), si bien que la modification des données d'image vidéo garantit que ledit certain utilisateur parmi les plusieurs deuxièmes utilisateurs (9) qui est représenté, et vers lequel le regard (16) du premier utilisateur (5) est dirigé, voie qu'il est regardé, tandis que les autres deuxièmes utilisateurs (9) voient qu'ils ne sont pas regardés.

2. Procédé de vidéoconférence selon la revendication 1,
**caractérisé en ce que**
lors du traitement des données d'images vidéo, les données d'images vidéo modifiées sont générées par un réseau antagoniste génératif (GAN, generative adversarial network) comportant un réseau générateur et un réseau discriminateur,
ledit réseau générateur générant des données d'image vidéo transformées et le réseau discriminateur évaluant une similarité entre la représentation de la tête du premier utilisateur (5) dans les données d'image vidéo transformées et les données d'image vidéo acquises, et évaluant une correspondance entre la direction du regard (16) du premier utilisateur (5) dans les données d'image vidéo transformées et la direction du regard cible.

3. Procédé de vidéoconférence selon la revendication 1,
**caractérisé en ce que**
les données d'image vidéo acquises par le premier dispositif d'acquisition d'images (3) et comprenant au moins une représentation de la tête du premier utilisateur (5) sont analysées au moyen de l'unité de traitement (14) de façon à relever une expression émotionnelle du premier utilisateur (5), qui est associée à une ou plusieurs classes d'expressions émotionnelles,
le réseau discriminateur évalue en outre une correspondance entre la ou les classes d'expressions émotionnelles de la représentation de la tête du premier utilisateur (5) dans les données d'image vidéo modifiées et la ou les classes d'expressions émotionnelles associées de la représentation de la tête du premier utilisateur (5) dans les données d'image vidéo acquises.

4. Procédé de vidéoconférence selon l'une des revendications 1 à 3,
**caractérisé en ce que**
lors du traitement des données d'image vidéo, une zone de direction du regard (21) affichant les yeux du premier utilisateur (5) est extraite d'une zone résiduelle (22), pour ainsi générer des données de portion d'image vidéo,
ladite zone de direction du regard (21) présente dans les données de portion d'image vidéo est ensuite modifiée de façon que la direction du regard (16) du premier utilisateur (5) fixée par la représentation des yeux apparaisse dans les données de portion d'image vidéo modifiées de ladite zone de direction du regard (21) comme si le premier dispositif d'acquisition d'image (3) était disposé sur ladite droite (18), puis les données de portion d'image vidéo modifiées de la zone de direction du regard (21) sont réinsérées dans la zone restante (22) des données d'image vidéo, pour ainsi générer les données d'image vidéo modifiées.

5. Procédé de vidéoconférence selon la revendication 4,
**caractérisé en ce que**
la zone de direction du regard (21) des données d'image vidéo est divisée en une première sous-zone (23) qui comprend la représentation d'un premier œil du premier utilisateur (5) et une deuxième sous-zone (24) qui comprend la représentation d'un deuxième œil du premier utilisateur (5).

6. Procédé de vidéoconférence selon la revendication 4,
**caractérisé en ce que**
la zone de direction du regard (21) des données d'image vidéo comprend la représentation de la tête du premier utilisateur (5) et la zone restante (22) comprend un arrière-plan de la représentation de la tête.

7. Procédé de vidéoconférence selon l'une des revendications 4 à 6,
**caractérisé en ce que**
initialement, plusieurs images du premier utilisateur (5) sont acquises et stockées, dans lesquelles la zone de direction du regard (21) du premier utilisateur (5) définit différentes directions du regard (16) sans modification de la pose de la tête du premier utilisateur (5), et
la direction du regard cible du premier utilisateur (5) modifiée, destinée à être générée par le traitement des données d'image vidéo, est comparée aux directions du regard (16) des images stockées et il est sélectionné une image dans laquelle la direction du regard (16) est au plus proche de la direction du regard cible du premier utilisateur (5) modifiée destinée à être générée, et
lors du traitement des données d'image vidéo, l'image sélectionnée est utilisée pour générer les données de portion d'image vidéo et/ou données d'image vidéo modifiées.

8. Procédé de vidéoconférence selon l'une des revendications 4 à 7,
**caractérisé en ce que**
la zone de direction du regard (21) comprend, dans une zone de bord (27), une zone oculaire (25) qui comprend la représentation de l'iris, y compris la pupille, d'au moins un des yeux du premier utilisateur (5), et une zone de transition (26) entre la zone de bord (27) et la zone oculaire (25),
lors du traitement des données d'image vidéo, la zone de direction du regard (21) est modifiée de façon à modifier la zone oculaire (25) pour que la direction du regard (16) du premier utilisateur (5) apparaisse, dans les données d'image vidéo modifiées de la zone oculaire (25), comme si le premier dispositif d'acquisition d'image (3) était disposé sur ladite droite (18), la représentation dans la zone de bord (27) faisant suite de manière fluide à la représentation des zones voisines de la zone restante (22) et, dans la zone de transition (26), les données d'image vidéo sont modifiées de façon à produire une transition de la représentation modifiée dans la zone oculaire (25) à la représentation dans la zone de bord (27).

9. Procédé de vidéoconférence selon la revendication 1,
**caractérisé en ce que**
les données d'image vidéo acquises par le premier dispositif d'acquisition d'images (3) comprennent au moins une représentation de la tête du premier utilisateur (5),
la pose de la tête du premier utilisateur (5) est déterminée dans les données d'images vidéo acquises, et
la direction du regard (16) du premier utilisateur (5) est acquise à partir de la pose déterminée de la tête du premier utilisateur (5).

10. Procédé de vidéoconférence selon la revendication 9,
**caractérisé en ce que**
les étapes suivantes sont effectuées lors du traitement des données d'images vidéo acquises :
a) création d'un modèle tridimensionnel déformable de la tête du premier utilisateur (5),
b) projection des données d'image vidéo acquises dans le modèle tridimensionnel du premier utilisateur (5) créé afin de créer une première représentation tridimensionnelle de la tête du premier utilisateur (5) acquise par le premier dispositif d'acquisition d'images (3), cette première représentation tridimensionnelle présentant au moins une zone manquante résultant de zones occluses de la tête du premier utilisateur qui ne sont pas visibles dans les données d'image vidéo acquises,
c) calcul d'une texture pour combler la zone manquante,
d) génération d'une deuxième représentation tridimensionnelle de la tête du premier utilisateur (5) dans laquelle la zone manquante est comblée avec la texture calculée, et
e) modification des données d'image vidéo acquises, de façon que la tête du premier utilisateur soit représentée au moyen de la deuxième représentation tridimensionnelle pour que la direction du regard cible du premier utilisateur (5) représenté dans les données d'image vidéo modifiées apparaisse comme si le premier dispositif d'acquisition d'image (3) était disposé sur une droite (18) qui passe par une première zone entourant les yeux du premier utilisateur (5) et par une deuxième zone entourant les yeux du deuxième utilisateur (9) représentés sur le premier dispositif d'affichage (4).

11. Procédé de vidéoconférence selon la revendication 10,
**caractérisé en ce que**
le modèle tridimensionnel de la tête généré à l'étape a) comprend des nœuds paramétrés, si bien que le modèle tridimensionnel de la tête est défini par un ensemble de paramètres renfermant une pluralité de paramètres.

12. Procédé de vidéoconférence selon l'une des revendications 10 et 11,
**caractérisé en ce que**
à l'étape c), lors du calcul d'une texture pour combler la zone manquante, un processus de modélisation géométrique est effectué pour créer une image bidimensionnelle qui représente la projection obtenue à l'étape b) dans le modèle tridimensionnel, et l'image bidimensionnelle créée est utilisée pour entraîner un réseau antagoniste génératif (GAN, generative adversarial network).

13. Procédé de vidéoconférence selon la revendication 12,
**caractérisé en ce que**
la texture permettant de combler la zone manquante à l'étape c) est calculée selon un procédé d'apprentissage automatique entraîné selon les étapes suivantes consistant à :
c1) fournir une trame vidéo à partir de données d'images vidéo d'entraînement,
c2) estimer des paramètres du modèle tridimensionnel de la tête du premier utilisateur (5),
c3) projeter la trame vidéo fournie dans le modèle tridimensionnel du premier utilisateur (5) présentant les paramètres estimés,
c4) créer une image bidimensionnelle qui représente la projection créée à l'étape c3) et qui contient la zone manquante,
c5) créer une image bidimensionnelle modifiée par application d'un masque à l'image bidimensionnelle créée à l'étape c4), le masquage agrandissant la zone manquante,
c6) introduction de l'image bidimensionnelle modifiée créée à l'étape c5) dans l'entraînement du réseau antagoniste génératif (GAN, generative adversarial network), la différence entre l'image bidimensionnelle et l'image bidimensionnelle modifiée étant prise en compte dans la fonction de perte.

14. Système de vidéoconférence (1) comportant
un premier dispositif de vidéoconférence (2) présentant un premier dispositif d'affichage (4) et un premier dispositif de capture d'images (3), ledit premier dispositif de capture d'images (3) étant agencé pour capturer au moins une zone de la tête (20) comportant les yeux d'un premier utilisateur (5), dans une position dans laquelle le premier utilisateur (5) regarde les données d'image vidéo affichées par le premier dispositif d'affichage (4),
un deuxième dispositif de vidéoconférence (6) situé à distance du premier dispositif de vidéoconférence (2), couplé au premier dispositif de vidéoconférence (2) par liaison de données et présentant un deuxième dispositif d'affichage (8) pour afficher les données d'image vidéo acquises par le premier dispositif de capture d'image (3),
une unité de traitement (14) couplée au premier dispositif d'acquisition d'images (3) et conçu pour recevoir et traiter les données d'images vidéo acquises par le premier dispositif d'acquisition d'images (3) et pour transmettre les données d'images vidéo traitées au deuxième dispositif d'affichage (8) du deuxième dispositif de vidéoconférence (6) ;
ladite unité de traitement (14) étant conçue, lors du traitement des données d'image vidéo, pour détecter la direction du regard (16) du premier utilisateur (5) représenté et pour modifier l'affichage, dans les données d'image vidéo, d'au moins la zone de la tête (20) comportant les yeux du premier utilisateur (5), de telle façon qu'une direction de regard cible du premier utilisateur (5) apparaisse dans les données d'image vidéo modifiées comme si le premier dispositif d'acquisition d'image (3) était disposé sur une droite (18) qui passe par une première zone entourant les yeux du premier utilisateur (5) et par une deuxième zone entourant les yeux du deuxième utilisateur (9) représentés sur le premier dispositif d'affichage (4), **caractérisé en ce que**
le premier dispositif d'affichage (4) est conçu de façon que les données d'image vidéo qu'il affiche comprennent au moins une représentation des yeux de plusieurs deuxièmes utilisateurs (9) qui sont acquis conjointement par le deuxième dispositif d'acquisition d'images (7), et
l'unité de traitement (14) est conçue pour :
déterminer, au moyen de la direction du regard (16) détectée du premier utilisateur (5), si le premier utilisateur (5) regarde un point du premier dispositif d'affichage (4) et, s'il a été déterminé qu'il regarde un point du premier dispositif d'affichage (4), déterminer quel objet est actuellement affiché en ce point par le premier dispositif d'affichage (4),
déterminer si l'objet est une représentation du visage d'un certain utilisateur parmi les plusieurs deuxièmes utilisateurs (9), et
s'il a été déterminé que l'objet est une représentation du visage dudit certain utilisateur parmi les plusieurs deuxièmes utilisateurs (9), faire apparaître, lors du traitement des données d'image vidéo, la direction du regard cible du premier utilisateur (5) représenté dans les données d'image vidéo modifiées, de telle façon que le premier utilisateur (5) regarde de la même manière le visage dudit certain utilisateur parmi les plusieurs deuxièmes utilisateurs (9) affiché sur le premier dispositif d'affichage (4), et
s'il a été déterminé que l'objet est une représentation du visage dudit certain utilisateur parmi les plusieurs deuxièmes utilisateurs (9), mais qu'il n'a pas été déterminé quelle zone de la représentation du visage est regardée, faire apparaître, dans les données d'image vidéo traitées, la direction du regard cible du premier utilisateur (5) représenté dans les données d'image vidéo modifiées, comme si le premier dispositif d'acquisition d'image (3) était disposé sur ladite droite (18) qui passe par une première zone entourant les yeux du premier utilisateur et par une deuxième zone entourant les yeux dudit certain utilisateur parmi les plusieurs deuxièmes utilisateurs (9) qui sont représentés sur le premier dispositif d'affichage (4), si bien que la modification des données d'image vidéo garantit que ledit certain utilisateur parmi les plusieurs deuxièmes utilisateurs (9) qui est représenté, et vers lequel le regard (16) du premier utilisateur (5) est dirigé, voie qu'il est regardé, tandis que les autres deuxièmes utilisateurs (9) voient qu'ils ne sont pas regardés.
